(19) Europäisches Patentamt
European Patent Office
Office européen des brevets

(11) **EP 4 397 190 A1**

(12) **EUROPEAN PATENT APPLICATION**
published in accordance with Art. 153(4) EPC

(43) Date of publication:
**10.07.2024 Bulletin 2024/28**

(21) Application number: **22864575.0**

(22) Date of filing: **30.08.2022**

(51) International Patent Classification (IPC):
**A23L 19/00** *(2016.01)*

(52) Cooperative Patent Classification (CPC):
**A23L 19/00**

(86) International application number:
**PCT/JP2022/032634**

(87) International publication number:
**WO 2023/032993 (09.03.2023 Gazette 2023/10)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **31.08.2021 JP 2021141817**

(71) Applicant: **Mizkan Holdings Co., Ltd.
Handa-shi, Aichi 475-8585 (JP)**

(72) Inventors:
• **KATSUKI, Mao
Handa-shi, Aichi 475-8585 (JP)**
• **ICHINOSE, Chika
Handa-shi, Aichi 475-8585 (JP)**
• **KASAI, Makoto
Handa-shi, Aichi 475-8585 (JP)**

(74) Representative: **Hasegawa, Kan
Patentanwaltskanzlei Hasegawa
Untere Hauptstraße 56
85354 Freising (DE)**

(54) **MUSHROOM INGREDIENT-CONTAINING FOOD PRODUCT AND PRODUCTION METHOD THEREOF**

(57) The object is to suppress explosive boiling during heat cooking of a mushroom-ingredient-containing food product while maintaining the chewing texture of the mushroom ingredients even after the heat cooking.

Provided is a food product containing mushroom ingredients, the food product satisfying all of the following (1) to (3):

(1) the food product contains a mushroom ingredient having a shortest side length of greater than 5 mm at a content of 1.0 mass% or more in terms of wet mass in the food product;

(2) the content ratio of a mushroom ingredient having a shortest side length of 5 mm or less to the mushroom ingredient having the shortest side length of greater than 5 mm is 20 times or less in terms of wet mass in a 10 mesh-on fraction;

(3) when a 10 mesh-pass fraction is measured by "Method α", the maximum viscosity at a time point when the fraction reaches 80°C is less than 1200 cP, wherein in the "Method α", the viscosity of 25 g of a measurement sample is measured while the temperature is increased from 50°C to 80°C at a temperature increase rate of 6°C/minute using a rapid visco analyzer (RVA).

EP 4 397 190 A1

**Description**

FIELD

The present invention relates to food products containing a mushroom ingredient and to a method for producing the same.

BACKGROUND

Conventionally, various food products containing mushroom ingredients are known. For example, with regard to a mushroom-ingredient-containing liquid food product in a retort container, PTL 1 discloses, as a technique for preventing the mushroom ingredient from bursting when the liquid food product is heated in a microwave oven, a method for setting the size of the mushroom ingredient to a certain size or less and adjusting the viscosity of a liquid medium to within a predetermined range.

[CITATION LIST]

[PATENT LITERATURE]

[PTL 1] JP 2018-023327 A

SUMMARY

[TECHNICAL PROBLEM]

However, conventional mushroom-ingredient-containing food products as typified in PTL 1 are problematic in that explosive boiling may occur during heat cooking, and the chewing texture of the mushroom ingredient after heat cooking is easily impaired. Therefore, a demand for an improvement in such problems has existed.

[SOLUTION TO PROBLEM]

In light of the above problems, the present inventors conducted intensive examinations, and discovered that by adjusting, to greater than a predetermined proportion, the content of mushroom ingredients having a size exceeding a predetermined value, adjusting, to within a predetermined range, a ratio of the content of mushroom ingredients having a size equal to or less than the predetermined value to the content of mushroom ingredients having a size exceeding the predetermined value, and adjusting the elevated temperature viscosity characteristics of a fraction containing mushrooms having a size equal to or less than the predetermined value and other edible plants to fall within a predetermined range, explosive boiling during heat cooking can be suppressed, the chewing texture of the mushroom ingredients can be maintained even after heat cooking, and a mushroom-ingredient-containing food product having an excellent balance can be obtained, and thereby the inventors arrived at the present invention.
That is, the gist of the present invention relates to, for example, the followings.

[Aspect 1] A food product containing mushroom ingredients, the food product satisfying all of the following (1) to (3):

(1) the food product contains a mushroom ingredient having a shortest side length of greater than 5 mm, greater than 5.5 mm, greater than 6.0 mm, greater than 6.5 mm, greater than 7.0 mm, greater than 7.5 mm, or greater than 8.0 mm, wherein the upper limit of the shortest side length is not limited, but is usually less than 25 mm, or less than 1 mesh-pass (mesh opening of 25 mm, wire diameter of 3.55 mm), at a content of 1.0 mass% or more, 1.5 mass% or more, 1.8 mass% or more, 2.0 mass% or more, 2.5 mass% or more, 3.0 mass% or more, 3.5 mass% or more, 4.0 mass% or more, 4.5 mass% or more, 5.0 mass% or more, 6.0 mass% or more, 7.0 mass% or more, 8.0 mass% or more, 9.0 mass% or more, or 10.0 mass% or more, wherein the upper limit of the content is not limited, but may be 60 mass% or less, 50 mass% or less, 40 mass% or less, 30 mass% or less, 26 mass% or less, 20 mass% or less, or 15 mass% or less, in terms of wet mass in the food product;
(2) the content ratio of a mushroom ingredient having a shortest side length of 5 mm or less, 4.8 mm or less, 4.4 mm or less, or 4.1 mm or less, wherein the lower limit of the shortest side length is not limited, but, for example, is greater than 2.0 mm, or greater than 10 mesh-on (mesh opening of 2.00 mm, wire diameter of 0.90 mm), to the mushroom ingredient having the shortest side length of greater than 5 mm, greater than 5.5 mm, greater than 6.0 mm, greater than 6.5 mm, greater than 7.0 mm, greater than 7.5 mm, or greater than 8.0 mm, wherein the upper limit of the shortest side length is not limited, but is usually less than 25 mm, or less than 1 mesh-pass (mesh opening of 25 mm, wire diameter of 3.55 mm) is 20 times or less, 18 times or less, 16 times or less, 14 times or less, 12 times or less, 10 times or less, 8 times or less, 6 times or less, 4 times or less, 3 times or less, 2 times or less, 1.8 times or less, 1.6 times or less, 1.4 times or less, 1.2 times or less, 1.0 times or less, 0.8 times or less, 0.7 times or less, 0.6 times or less, or 0.5 times or less, wherein the lower limit of the content ratio is not limited, but is, for example, usually 0 times or greater, or 0.01 times or greater, in terms of wet mass in a 10 mesh-on fraction;

(3) when a 10 mesh-pass fraction is measured by "Method $\alpha$", the maximum viscosity at a time point when the fraction reaches 80°C is less than 1200 cP, less than 1100 cP, less than 1000 cP, less than 900 cP, less than 830 cP, less than 800 cP, less than 730 cP, less than 700 cP, less than 640 cP, less than 600 cP, less than 500 cP, less than 400 cP, less than 300 cP, or less than 200 cP, and in particular, is less than 100 cP, wherein the lower limit of the maximum viscosity is not limited, but is, for example, 1 cP or greater, 3 cP or greater, 5 cP or greater, 10 cP or greater, 30 cP or greater, or 65 cP or greater, wherein

in the "Method $\alpha$", the viscosity of 25 g of a measurement sample is measured while the temperature is increased from 50°C to 80°C at a temperature increase rate of 6°C/minute using a rapid visco analyzer (RVA).

[Aspect 2] The food product according to aspect 1, wherein
the food product contains a mushroom ingredient having a volume of greater than 125 mm$^3$, greater than 190 mm$^3$, greater than 210 mm$^3$, greater than 250 mm$^3$, greater than 300 mm$^3$, greater than 400 mm$^3$, or greater than 510 mm$^3$, wherein the upper limit of the volume is not limited, but is, for example, 15 cm$^3$ or less, at a content of 1.0 mass% or more, 1.5 mass% or more, 1.8 mass% or more, 2.0 mass% or more, 2.5 mass% or more, 3.0 mass% or more, 3.5 mass% or more, 4.0 mass% or more, 4.5 mass% or more, 5.0 mass% or more, 6.0 mass% or more, 7.0 mass% or more, 8.0 mass% or more, 9.0 mass% or more, or 10.0 mass% or more, wherein the upper limit of the content is not limited, but is, for example, 60 mass% or less, 50 mass% or less, 40 mass% or less, 30 mass% or less, 26 mass% or less, 20 mass% or less, or 15 mass% or less, in terms of wet mass in the food product.

[Aspect 3] The food product according to aspect 1 or 2, wherein the 10 mesh-pass fraction contains an edible plant.

[Aspect 4] The food product according to aspect 3, wherein the edible plant includes one or more edible plants selected from vegetables, grains, mushrooms, fruits, potatoes, algae, nuts, and legumes.

[Aspect 5] The food product according to any one of aspects 1 to 4, wherein the content percentage of insoluble dietary fiber is 0.001 mass% or more, 0.01 mass% or more, 0.1 mass% or more, 0.5 mass% or more, 1.0 mass% or more, 1.5 mass% or more, 2.0 mass% or more, 2.5 mass% or more, or particularly 3.0 mass% or more, wherein the upper limit of the content percentage is not limited, but is usually 40 mass% or less, 30 mass% or less, 10 mass% or less, or 5 mass% or less, in terms of wet mass in the 10 mesh-pass fraction.

[Aspect 6] The food product according to any one of aspects 1 to 5, wherein when the 10 mesh-pass fraction is measured by the "Method $\alpha$", a ratio of [value $\beta$]/[value $\alpha$] is 5.0 or less, 4.5 or less, 4.0 or less, 3.5 or less, 3.0 or less, 2.5 or less, 2.0 or less, 1.7 or less, 1.4 or less, 1.0 or less, or 0.9 or less, wherein the lower limit of the ratio of [value $\beta$]/[value $\alpha$] is not limited, but is, for example, 0.10 or greater, 0.20 or greater, 0.30 or greater, 0.40 or greater, 0.45 or greater, 0.50 or greater, 0.55 or greater, or 0.60 or greater, wherein

[Value $\alpha$] refers to a viscosity (cP) at 50°C, and
[Value $\beta$] refers to a viscosity (cP) at 80°C.

[Aspect 7] The food product according to any one of aspects 1 to 6, wherein the food product contains starch at a content of 1.0 mass% or less, 0.9 mass% or less, 0.8 mass% or less, 0.7 mass% or less, 0.6 mass% or less, or 0.5 mass% or less, wherein the lower limit of the content is not limited, but, for example, substantially no starch is contained therein, or the lower limit of the content is 0 mass%, more than 0 mass%, or 0.1 mass% or more, in terms of wet mass in the 10 mesh-pass fraction.

[Aspect 8] The food product according to any one of aspects 1 to 7, wherein the food product is used in an application for cooking with microwave heating.

[Aspect 9] A method for producing the food product described in any one of aspects 1 to 8, the method comprising the following step (i):

(i) a step of preparing a mixture that satisfies all of the following (1) to (3):

(1) the mixture contains a mushroom ingredient having a shortest side length of greater than 5 mm, greater than 5.5 mm, greater than 6.0 mm, greater than 6.5 mm, greater than 7.0 mm, greater than 7.5 mm, or greater than 8.0 mm, wherein the upper limit of the shortest side length is not limited, but is usually less than 25 mm, or less than 1 mesh-pass (mesh opening of 25 mm, wire diameter of 3.55 mm), at a content of 1.0 mass% or more, 1.5 mass% or more, 1.8 mass% or more, 2.0 mass% or more, 2.5 mass% or more, 3.0 mass% or more, 3.5 mass% or more, 4.0 mass% or more, 4.5 mass% or more, 5.0 mass% or more, 6.0 mass% or more, 7.0 mass% or more, 8.0 mass% or more, 9.0 mass% or more, or 10.0 mass% or more, wherein the upper limit of the content is not limited, but may be 60 mass% or less, 50 mass% or less, 40 mass% or less, 30 mass% or less, 26 mass% or less, 20 mass% or less, or 15 mass% or less, in terms of wet mass in the mixture;

(2) the content ratio of a mushroom ingredient having a shortest side length of 5 mm or less, 4.8 mm or less, 4.4 mm or less, or 4.1 mm or less, wherein the lower limit of the shortest side length is not limited, but, for example, is greater than 2.0 mm, or greater than 10 mesh-on (mesh opening of 2.00 mm, wire diameter of 0.90 mm), to the mushroom ingredient having the shortest side length of greater than 5 mm, greater than 5.5 mm, greater than 6.0 mm, greater than 6.5 mm, greater than 7.0 mm, greater than 7.5 mm, or greater than 8.0 mm, wherein the upper limit of the shortest side length is not limited, but is usually less than 25 mm, or less than 1 mesh-pass (mesh opening of 25 mm, wire diameter of 3.55 mm) is 20 times or less, 18 times or less, 16 times or less, 14 times or less, 12 times or less, 10 times or less, 8 times or less, 6 times or less, 4 times or less, 3 times or less, 2 times or less, 1.8 times or less, 1.6 times or less, 1.4 times or less, 1.2 times or less, 1.0 times or less, 0.8 times or less, 0.7 times or less, 0.6 times or less, or 0.5 times or less, wherein the lower limit of the content ratio is not limited, but is, for example, 0 times or greater, or 0.01 times or greater, in terms of wet mass in a 10 mesh-on fraction;

(3) when a 10 mesh-pass fraction is measured by the "Method $\alpha$", the maximum viscosity at a time point when the fraction reaches 80°C is less than 1200 cP, less than 1100 cP, less than 1000 cP, less than 900 cP, less than 830 cP, less than 800 cP, less than 730 cP, less than 700 cP, less than 640 cP, less than 600 cP, less than 500 cP, less than 400 cP, less than 300 cP, or less than 200 cP, and in particular, is less than 100 cP, wherein the lower limit of the maximum viscosity is not limited, but is, for example 1 cP or greater, 3 cP or greater, 5 cP or greater, 10 cP or greater, 30 cP or greater, or 65 cP or greater.

[Aspect 10] A method for suppressing explosive boiling during heat cooking of a food product containing mushroom ingredients, the method comprising the following step (i):

(i) a step of preparing a mixture that satisfies all of the following (1) to (3):

(1) the mixture contains a mushroom ingredient having a shortest side length of greater than 5 mm, greater than 5.5 mm, greater than 6.0 mm, greater than 6.5 mm, greater than 7.0 mm, greater than 7.5 mm, or greater than 8.0 mm, wherein the upper limit of the shortest side length is not limited, but is usually less than 25 mm, or less than 1 mesh-pass (mesh opening of 25 mm, wire diameter of 3.55 mm), at a content of 1.0 mass% or more, 1.5 mass% or more, 1.8 mass% or more, 2.0 mass% or more, 2.5 mass% or more, 3.0 mass% or more, 3.5 mass% or more, 4.0 mass% or more, 4.5 mass% or more, 5.0 mass% or more, 6.0 mass% or more, 7.0 mass% or more, 8.0 mass% or more, 9.0 mass% or more, or 10.0 mass% or more, wherein the upper limit of the content is not limited, but may be 60 mass% or less, 50 mass% or less, 40 mass% or less, 30 mass% or less, 26 mass% or less, 20 mass% or less, or 15 mass% or less, in terms of wet mass in the mixture;

(2) the content ratio of a mushroom ingredient having a shortest side length of 5 mm or less, 4.8 mm or less, 4.4 mm or less, or 4.1 mm or less, wherein the lower limit of the shortest side length is not limited, but, for example, is greater than 2.0 mm, or greater than 10 mesh-on (mesh opening of 2.00 mm, wire diameter of 0.90 mm), to the mushroom ingredient having the shortest side length of greater than 5 mm, greater than 5.5 mm, greater than 6.0 mm, greater than 6.5 mm, greater than 7.0 mm, greater than 7.5 mm, or greater than 8.0 mm, wherein the upper limit of the shortest side length is not limited, but is usually less than 25 mm, or less than 1 mesh-pass (mesh opening of 25 mm, wire diameter of 3.55 mm) is 20 times or less, 18 times or less, 16 times or less, 14 times or less, 12 times or less, 10 times or less, 8 times or less, 6 times or less, 4 times or less, 3 times or less, 2 times or less, 1.8 times or less, 1.6 times or less, 1.4 times or less, 1.2 times or less, 1.0 times or less, 0.8 times or less, 0.7 times or less, 0.6 times or less, or 0.5 times or less, wherein the lower limit of the content ratio is not limited, but is, for example, 0 times or greater, or 0.01 times or greater, in terms of wet mass in a 10 mesh-on fraction;

(3) when a 10 mesh-pass fraction is measured by the "Method $\alpha$", the maximum viscosity at a time point when the fraction reaches 80°C is less than 1200 cP, less than 1100 cP, less than 1000 cP, less than 900 cP, less than 830 cP, less than 800 cP, less than 730 cP, less than 700 cP, less than 640 cP, less than 600 cP, less than 500 cP, less than 400 cP, less than 300 cP, or less than 200 cP, and in particular, is less than 100 cP, wherein the lower limit of the maximum viscosity is not limited, but is, for example 1 cP or greater, 3 cP or greater, 5 cP or greater, 10 cP or greater, 30 cP or greater, or 65 cP or greater.

[Aspect 11] A method for maintaining a chewing texture of mushroom ingredients after heat cooking of a food product containing the mushroom ingredients, the method comprising the following step (i):

(i) a step of preparing a mixture that satisfies all of the following (1) to (3):

(1) the mixture contains a mushroom ingredient having a shortest side length of greater than 5 mm, greater than 5.5 mm, greater than 6.0 mm, greater than 6.5 mm, greater than 7.0 mm, greater than 7.5 mm, or greater than 8.0 mm, wherein the upper limit of the shortest side length is not limited, but is usually less than 25 mm, or less than 1 mesh-pass (mesh opening of 25 mm, wire diameter of 3.55 mm), at a content of 1.0 mass% or more, 1.5 mass% or more, 1.8 mass% or more, 2.0 mass% or more, 2.5 mass% or more, 3.0 mass% or more, 3.5 mass% or more, 4.0 mass% or more, 4.5 mass% or more, 5.0 mass% or more, 6.0 mass% or more, 7.0 mass% or more, 8.0 mass% or more, 9.0 mass% or more, or 10.0 mass% or more, wherein the upper limit of the content is not limited, but may be 60 mass% or less, 50 mass% or less, 40 mass% or less, 30 mass% or less, 26 mass% or less, 20 mass% or less, or 15 mass% or less, in terms of wet mass in the mixture;

(2) the content ratio of a mushroom ingredient having a shortest side length of 5 mm or less, 4.8 mm or less, 4.4 mm or less, or 4.1 mm or less, wherein the lower limit of the shortest side length is not limited, but, for example, is greater than 2.0 mm, or greater than 10 mesh-on (mesh opening of 2.00 mm, wire diameter of 0.90 mm), to the mushroom ingredient having the shortest side length of greater than 5 mm, greater than 5.5 mm, greater than 6.0 mm, greater than 6.5 mm, greater than 7.0 mm, greater than 7.5 mm, or greater than 8.0 mm, wherein the upper limit of the shortest side length is not limited, but is usually less than 25 mm, or less than 1 mesh-pass (mesh opening of 25 mm, wire diameter of 3.55 mm) is 20 times or less, 18 times or less, 16 times or less, 14 times or less, 12 times or less, 10 times or less, 8 times or less, 6 times or less, 4 times or less, 3 times or less, 2 times or less, 1.8 times or less, 1.6 times or less, 1.4 times or less, 1.2 times or less, 1.0 times or less, 0.8 times or less, 0.7 times or less, 0.6 times or less, or 0.5 times or less, wherein the lower limit of the content ratio is not limited, but is, for example, 0 times or greater, or 0.01 times or greater, in terms of wet mass in a 10 mesh-on fraction;

(3) when a 10 mesh-pass fraction is measured by the "Method $\alpha$", the maximum viscosity at a time point when the fraction reaches 80°C is less than 1200 cP, less than 1100 cP, less than 1000 cP, less than 900 cP, less than 830 cP, less than 800 cP, less than 730 cP, less than 700 cP, less than 640 cP, less than 600 cP, less than 500 cP, less than 400 cP, less than 300 cP, or less than 200 cP, and in particular, is less than 100 cP, wherein the lower limit of the maximum viscosity is not limited, but is, for example 1 cP or greater, 3 cP or greater, 5 cP or greater, 10 cP or greater, 30 cP or greater, or 65 cP or greater.

[Aspect 12] A method for suppressing explosive boiling during heat cooking of a food product containing mushroom ingredients while maintaining a chewing texture of the mushroom ingredients after the heat cooking, the method comprising the following step (i):

(i) a step of preparing a mixture that satisfies all of the following (1) to (3):

(1) the mixture contains a mushroom ingredient having a shortest side length of greater than 5 mm, greater than 5.5 mm, greater than 6.0 mm, greater than 6.5 mm, greater than 7.0 mm, greater than 7.5 mm, or greater than 8.0 mm, wherein the upper limit of the shortest side length is not limited, but is usually less than 25 mm, or less than 1 mesh-pass (mesh opening of 25 mm, wire diameter of 3.55 mm), at a content of 1.0 mass% or more, 1.5 mass% or more, 1.8 mass% or more, 2.0 mass% or more, 2.5 mass% or more, 3.0 mass% or more, 3.5 mass% or more, 4.0 mass% or more, 4.5 mass% or more, 5.0 mass% or more, 6.0 mass% or more, 7.0 mass% or more, 8.0 mass% or more, 9.0 mass% or more, or 10.0 mass% or more, wherein the upper limit of the content is not limited, but may be 60 mass% or less, 50 mass% or less, 40 mass% or less, 30 mass% or less, 26 mass% or less, 20 mass% or less, or 15 mass% or less, in terms of wet mass in the mixture;

(2) the content ratio of a mushroom ingredient having a shortest side length of 5 mm or less, 4.8 mm or less, 4.4 mm or less, or 4.1 mm or less, wherein the lower limit of the shortest side length is not limited, but, for example, is greater than 2.0 mm, or greater than 10 mesh-on (mesh opening of 2.00 mm, wire diameter of 0.90 mm), to the mushroom ingredient having the shortest side length of greater than 5 mm, greater than 5.5 mm, greater than 6.0 mm, greater than 6.5 mm, greater than 7.0 mm, greater than 7.5 mm, or greater than 8.0 mm, wherein the upper limit of the shortest side length is not limited, but is usually less than 25 mm, or less than 1 mesh-pass (mesh opening of 25 mm, wire diameter of 3.55 mm) is 20 times or less, 18 times or less, 16 times or less, 14 times or less, 12 times or less, 10 times or less, 8 times or less, 6 times or less, 4 times or less, 3 times or less, 2 times or less, 1.8 times or less, 1.6 times or less, 1.4 times or less, 1.2 times or less, 1.0 times or less, 0.8 times or less, 0.7 times or less, 0.6 times or less, or 0.5 times or less, wherein the lower limit of the content ratio is not limited, but is, for example, 0 times or greater, or 0.01 times or greater, in terms of wet mass in a 10 mesh-on fraction;

(3) when a 10 mesh-pass fraction is measured by the "Method $\alpha$", the maximum viscosity at a time point when the fraction reaches 80°C is less than 1200 cP, less than 1100 cP, less than 1000 cP, less than 900 cP, less than 830 cP, less than 800 cP, less than 730 cP, less than 700 cP, less than 640 cP, less than 600 cP, less than 500 cP, less than 400 cP, less than 300 cP, or less than 200 cP, and in particular, is less than 100 cP, wherein the lower limit of the maximum viscosity is not limited, but is, for example 1 cP or greater, 3 cP or greater, 5 cP or greater, 10 cP or greater, 30 cP or greater, or 65 cP or greater.

[Aspect 13] The method according to any one of aspects 9 to 12, wherein in the step (i), the content percentage of starch is 1.0 mass% or less, 0.9 mass% or less, 0.8 mass% or less, 0.7 mass% or less, 0.6 mass% or less, or 0.5 mass% or less, wherein the lower limit of the content percentage is not limited, but is, for example, 0 mass% or more, or 0.1 mass% or more, in terms of wet mass in a 10 mesh-pass fraction of the mixture.

[Aspect 14] The method according to any one of aspects 9 to 13, further comprising the following step (ii):

(ii) a step of heating the mixture of step (i) at a temperature of 60°C or higher, 70°C or higher, 80°C or higher, 90°C or higher, 100°C or higher, 110°C or higher, or 120°C or higher, wherein the upper limit of the temperature is not limited, but is, for example, 200°C or lower, 190°C or lower, 180°C or lower, 170°C or lower, 160°C or lower, 150°C or lower, 140°C or lower, 130°C or lower, or 125°C or lower, for 0.1 minutes or longer, 0.3 minutes or longer, 0.5 minutes or longer, 1 minutes or longer, 3 minutes or longer, 5 minutes or longer, 7 minutes or longer, or 10 minutes or longer, wherein the upper limit of the heating time is not limited, but is, for example, less than 10 hours, and in particular, the heating time may be less than 5 hours, less than 3 hours, less than 1 hour, less than 50 minutes, less than 40 minutes, or less than 30 minutes.

[Aspect 15] The method according to aspect 14, wherein in step (ii), the heating treatment is carried out such that when the 10 mesh-pass fraction of the mixture is measured by the "Method $\alpha$", a ratio of [value $\beta$]/[value $\alpha$] is 5.0 or less, 4.5 or less, 4.0 or less, 3.5 or less, 3.0 or less, 2.5 or less, 2.0 or less, 1.7 or less, 1.4 or less, 1.0 or less, or 0.9 or less, wherein the lower limit of the ratio of [value $\beta$]/[value $\alpha$] is not limited, but is, for example, 0.10 or greater, 0.20 or greater, 0.30 or greater, 0.40 or greater, 0.45 or greater, 0.50 or greater, 0.55 or greater, or 0.60 or greater, wherein

[Value $\alpha$] refers to a viscosity (cP) at 50°C
[Value $\beta$] refers to a viscosity (cP) at 80°C

[ADVANTAGEOUS EFFECTS OF INVENTION]

According to the present invention, a well-balanced mushroom-ingredient-containing food product in which explosive boiling during heat cooking is suppressed and the chewing texture of the mushroom ingredients is maintained even after heat cooking is provided.

DESCRIPTION OF EMBODIMENTS

Hereinafter, the present invention will be described in detail on the basis of specific embodiments. However, the present invention is not limited to the following embodiments and can be carried out in any form within a scope that does not depart from the gist of the present invention.

In the present specification, when a plurality of upper limit values and/or a plurality of lower limit values are presented with respect to the definition of a numerical range, unless otherwise specified, the definition of a numerical range in which at least a maximum value defined as the upper limit and a minimum value defined as the lower limit are combined shall be considered to be directly described, and all other numerical ranges obtained by combining any upper limit value among the upper limit values and any lower limit value among the lower limit values shall be considered to be included in one embodiment of the present invention. In addition, in the present specification, a numerical range defined as being "from" a first number "to" a second number means a numerical range from a lower limit value of the first number to an upper limit value of the second number. When a plurality of lower limit values and a plurality of upper limit values are separately indicated, a numerical range can be defined by selecting any lower limit value and any upper limit value and connecting the limit values by "from" and "to".

Mushroom-Ingredient-Containing Food Product of the Present Invention

One aspect of the present invention relates to a mushroom-ingredient-containing food product (may be appropriately referred to below as a "mushroom-ingredient-containing food product of the present invention" or simply as a "food product of the present invention"), which is a food product that contains a mushroom ingredient and satisfies each of the requirements described below.

In the present disclosure, the term "ingredient" generally refers to a solid food product having a 10 mesh-on size. Moreover, the term "liquid medium" generally refers to a component having a 10 mesh-pass size among components in a food sample.

·Mushroom Ingredients:

The food product of the present invention contains mushrooms as an ingredient. The type of mushroom is not limited, and enokitake mushrooms, wood ear mushrooms, black abalone mushrooms, shiitake mushrooms, shimeji mushrooms (particularly buna-shimeji mushrooms, hatake shimeji mushrooms, and hon shimeji mushrooms), golden oyster mushrooms, nameko mushrooms, chestnut mushrooms, oyster mushrooms, eryngii mushrooms, maitake mushrooms, button mushrooms, matsutake mushrooms, yanagi matsutake mushrooms, and the like can be suitably used.

The food product of the present invention may contain only a single type of mushroom, or may contain two or more types of mushrooms. When the food product of the present invention contains two or more types of mushrooms, the combination and ratio of the mushrooms may be arbitrary. A 10 mesh-on (preferably 1 mesh-pass/10 mesh-on) fraction and a 10 mesh-pass (preferably 10 mesh-pass/100 mesh-on) fraction may each independently contain only one type of mushroom, or may contain two or more types of mushrooms. When the 10 mesh-on (preferably 1 mesh-pass/10 mesh-on) fraction and the 10 mesh-pass (preferably 10 mesh-pass/100 mesh-on) fraction each contains two or more types of mushrooms, the combination and ratio of the mushrooms are arbitrary. The terms mesh-on and mesh-pass will be described later.

Each of the mushrooms in the food product of the present invention need only be present at least as a solid ingredient, but some of the mushrooms may be finely dispersed or dissolved in a liquid medium. Moreover, the 10 mesh-on (preferably, 1 mesh-pass/10 mesh-on) fraction and the 10 mesh-pass (preferably, 10 mesh-pass/100 mesh-on) fraction may each contain only one or more types of mushrooms, which are respectively different between the two fractions, the mesh-on fraction and the mesh-pass fraction may contain, in addition to the respectively different one or more types of mushrooms, one or more types of mushrooms that are common to the two fractions, or the mesh-on fraction and the mesh-pass fraction may each contain only one or more types of mushrooms that are common to the mesh-on fraction and the mesh-pass fraction.

·Edible Plants:

The food product of the present invention may contain one or more types of edible plants in addition to the mushroom ingredient. The term "edible plant" in the present invention refers to a plant that contains an edible portion and/or a non-edible portion thereof and is used for human consumption. The edible plants in the present invention are not limited in any manner as long as they are edible by humans, and examples thereof include vegetables, grains, mushrooms, fruits, potatoes, algae, nuts, and legumes, and of these, vegetables, grains, mushrooms, and nuts are particularly useful. Specifically, which food products correspond to edible plants can be understood by referring to, for example, the classifications of vegetables, grains, mushrooms, fruits, potatoes, algae, nuts, legumes, and the like among the classifications described in the "Standard Tables of Food Composition in Japan - 2015 (Seventh Revised Version), Supplementary Edition 2018" (food composition tables defined by the Ministry of Health, Labour and Welfare, in particular, see Table 1 on page 236). A single type of these edible plants may be used alone, or any combination of two or more types thereof may be used. Moreover, these edible plants may be used as is, or may be used after being subjected to various treatments (such as, for example, drying, heating, lye removal, peeling, seed and fruit removal, ripening, preserving in salt, and peel processing). In addition, the classification and specific type (name) of a food material can be determined by the state of the entire plant including the non-edible portion.

The food product of the present invention may contain only one type of edible plant, or may contain two or more types of edible plants. When the food product of the present invention contains two or more types of edible plants, the edible plants may be combined in any combination and at any ratio. That is, the two or more types of edible plants may be edible plants belonging to the same classification or may be edible plants belonging to two or more different classifications. The 10 mesh-on (preferably 1 mesh-pass/10 mesh-on) fraction and the 10 mesh-pass (preferably 10 mesh-pass/100 mesh-on) fraction may each independently contain only one type of edible plant, or may contain two or more types of edible plants. When the 10 mesh-on (preferably 1 mesh-pass/10 mesh-on) fraction and the 10 mesh-pass (preferably 10 mesh-pass/100 mesh-on) fraction each contain two or more types of edible plants, the combination and ratio of the edible plants are arbitrary.

Each of the edible plants in the food product of the present invention may be present as a solid ingredient, and some or all of the edible plants may be finely dispersed or dissolved in a liquid medium. Moreover, the 10 mesh-on (preferably, 1 mesh-pass/10 mesh-on) fraction and the 10 mesh-pass (preferably, 10 mesh-pass/100 mesh-on) fraction may each contain only one or more types of edible plants, which are respectively different between the two fractions, the mesh-on fraction and the mesh-pass fraction may contain, in addition to the respectively different one or more types of edible plants, one or more types of edible plants that are common to the two fractions, or the mesh-on fraction and the mesh-pass fraction may each contain only one or more types of edible plants that are all common to the mesh-on fraction and the mesh-pass fraction. Note that the 10 mesh-on (preferably, 1 mesh-pass/10 mesh-on) fraction and the 10 mesh-pass (preferably, 10 mesh-pass/100 mesh-on) fraction preferably contain at least edible plants belonging to the same classification, and more preferably contain edible plants of the same type.

In the present disclosure, the "non-edible portion" of the edible plant refers to a portion of the edible plant that is not suitable for normal eating and drinking or a portion that is discarded in normal eating habits, and the "edible portion" refers to a portion obtained by removing the discarded portion (non-edible portion) from the entire edible plant. Moreover, the site and ratio of the non-edible portion of an edible plant used in the present invention are both matters that would be naturally understood by a person skilled in the art who handles such edible plants and processed products thereof. As an example, with reference to the "discarded portion" and "rate of discard" described in the Standard Tables of Food Composition in Japan - 2015 (Seventh Revised Version), the "discarded portion" and "discard ratio" can be handled as the site and ratio of the non-edible portion, respectively. Table 1 below describes examples of the "discarded portion" and "discard ratio" (namely, the sites and ratios of non-edible portions) described in the Standard Tables of Food Composition in Japan - 2015 (Seventh Revised Version) for major edible plants. In addition, the sites and ratios of the edible portions can be understood from the sites and ratios of the non-edible portions of the edible plants.

[Table 1]

| Edible Plant | Site of Non-Edible Portion (Discarded Portion) | Ratio of Non-Edible Portion (Discard Ratio) |
|---|---|---|
| Vegetables / edamame / raw | shell | 45% |
| Vegetables / (corn) / sweet corn / immature seed, raw | bract, pistil, and cob | 50% |
| Vegetables / (pumpkins) / Japanese pumpkin / fruit, raw | fibrous strands, seeds, and both ends | 9% |
| Vegetables / (bell peppers) / red pepper / fruit, raw (paprika) | calyx, core, and seeds | 10% |
| Vegetables / beets / root, raw | root tip, peel, and petiole | 10% |
| Vegetables / broccoli / inflorescence, raw | stem and leaves | 50% |
| Vegetables / (tomatoes) / tomato / fruit, raw | calyx | 3% |
| Vegetables / (cabbages) / cabbage / head leaves, raw | core | 15% |
| Vegetables / spinach / leaves, raw | stock base | 10% |
| Vegetables / kale / leaves, raw | petiole base | 3% |
| Vegetables / (peas) / green peas / raw | shell | 55% |
| Vegetables / broad beans / immature bean / raw | seed coat, pod | 80% |
| Vegetables / (carrots) / root, with peel, raw | root tip and petiole base | 3% |
| Potatoes and starch / sweet potato / tuberous root, raw | peel and both ends | 10% |

Examples of the types of edible plants classified as vegetables include radishes, carrots, rutabaga, parsnip, turnips, black salsify, lotus root, beets (preferably beet (beetroot): a variety improved to make the root of the beet edible), threeleaf arrowhead, shallot, garlic, Japanese leek, lily bulb, kale, onions (in particular, pecoros), asparagus, aralia, cabbage, lettuce, spinach, Chinese cabbage, canola, Japanese mustard spinach, bok choy, chives, green onions, nozawana, butterbur, chard (silverbeet, Swiss chard), mizuna, tomatoes (including cherry tomatoes, which are one type of tomato), eggplant, pumpkin, green pepper, cucumber, Japanese ginger, cauliflower, broccoli, edible chrysanthemum, bitter gourd, okra, artichoke, zucchini, sugar beets, tiger nuts, ginger, perilla, wasabi, paprika, herbs (watercress, coriander, Chinese water spinach, celery, tarragon, chives, chervil, sage, thyme, laurel, parsley, mustard greens (mustard), mugwort, basil, oregano, rosemary, peppermint, savory, lemongrass, dill, wasabi leaf, Japanese pepper leaf, stevia), bracken, Japanese royal fern, bamboo shoots, and the like. Among these, plants belonging to the family Solanaceae (tomatoes, eggplants), plants belonging to the family Allium (onions (particularly, pecoros)), and garlic are preferably used. Note that each of the above-mentioned food materials can be used regardless of distinction between edible portions and non-edible portions.

In the present disclosure, when one or more types of edible plants classified into the above-mentioned vegetable species are contained, the total content thereof in terms of wet mass is usually 5 mass% or more, preferably 10 mass% or more, more preferably 15 mass% or more, and particularly preferably 20 mass% or more, of the entire mushroom-ingredient-containing food product. The upper limit is not particularly limited, but may usually be 99 mass% or 99 mass% or less of the entire mushroom-ingredient-containing food product. Note that the food product of the present invention preferably contains one or more types of the same or different vegetables at the above-mentioned proportion, and preferably contains one or more types of the same vegetable at the above-mentioned proportion.

Examples of the types of edible plants classified as grains include corn (including sweet corn that is unripened corn, and young corn that is even more unripened than sweet corn), rice, wheat, barley, sorghum, oats, triticale, rye, buckwheat, fonio, quinoa, barnyard millet, foxtail millet, proso millet, giant corn, sugarcane, and amaranth. Among these, corn (including sweet corn and young corn, which are unripened corns) is preferable. Note that each of the above-mentioned food materials can be used regardless of distinction between edible portions and non-edible portions.

In the present disclosure, when one or more types of edible plants classified into the above-mentioned grains are contained, the total content thereof in terms of wet mass is usually 5 mass% or more, preferably 10 mass% or more, more preferably 15 mass% or more, and particularly preferably 20 mass% or more, of the entire mushroom-ingredient-containing food product. The upper limit is not particularly limited, but may usually be 99 mass% or 99 mass% or less of the entire mushroom-ingredient-containing food product. Note that the food product of the present invention preferably contains one or more types of the same or different grains at the above-mentioned ratio, and preferably contains one or more types of the same grain at the above-mentioned ratio.

As the types of edible plants classified as mushroom, enokitake mushrooms, wood ear mushrooms, black abalone mushrooms, shiitake mushrooms, shimeji mushrooms (particularly buna-shimeji mushrooms, hatake shimeji mushrooms, and hon shimeji mushrooms), golden oyster mushrooms, nameko mushrooms, chestnut mushrooms, oyster mushrooms, eryngii mushrooms, maitake mushrooms, button mushrooms, matsutake mushrooms, yanagi matsutake mushrooms, and the like can be suitably used. Among these, enokitake, shiitake, buna-shimeji, button mushrooms, and eryngii mushrooms are preferable. Note that each of the above-mentioned food materials can be used regardless of distinction between edible portions and non-edible portions.

In the present disclosure, when one or more types of edible plants classified into the above-mentioned mushrooms are contained, the total content thereof in terms of wet mass is usually 5 mass% or more, preferably 10 mass% or more, more preferably 15 mass% or more, and particularly preferably 20 mass% or more, of the entire mushroom-ingredient-containing food product. The upper limit is not particularly limited, but may usually be 100 mass% or less or 100 mass% or less of the entire mushroom-ingredient-containing food product. Note that the food product of the present invention preferably contains one or more types of the same or different mushrooms at the above-mentioned ratio, and preferably contains one or more types of the same mushroom at the above-mentioned ratio.

Examples of the edible plants classified into nuts include almonds, cannabis, flaxseed, wild sesame, cashew nuts, pumpkin seeds, torreya nuts, ginkgo nuts, chestnuts, walnuts, poppy seeds, coconuts, sesame, beech tree nuts, Japanese horse chestnut, lotus seeds, water chestnuts, pistachios, sunflower seeds, Brazil nuts, hazelnuts, pecans, macadamia nuts, pine nuts, and peanuts. Among these, sesame, almonds, cashew nuts, macadamia nuts, pistachios, hazelnuts, coconuts and the like are preferable. Note that each of the above-mentioned food materials can be used regardless of distinction between edible portions and non-edible portions.

In the present disclosure, when one or more types of edible plants classified into the above-mentioned nuts are contained, the total content thereof in terms of wet mass is usually 5 mass% or more, preferably 10 mass% or more, more preferably 15 mass% or more, and particularly preferably 20 mass% or more, of the entire mushroom-ingredient-containing food product. The upper limit is not particularly limited, but may usually be 99 mass% or 99 mass% or less of the entire mushroom-ingredient-containing food product. Note that the food product of the present invention preferably contains one or more types of the same or different nuts at the above-mentioned ratio, and preferably contains one or more types of the same nut at the above-mentioned ratio.

The edible plant may be partially or entirely in the form of a processed product. The processed edible plant product may be in the form of a liquid, a solid, or a paste, but is usually contained in a 10 mesh-pass/100 mesh-on fraction. Therefore, the processed edible plant product constitutes a fraction (10 mesh-pass/100 mesh-on fraction) in which the liquid portion accounts for a large portion of the mushroom-ingredient-containing food product. In addition, the size of a large portion (for example, 80 mass% or more) of the particles of the processed edible plant product is preferably 100 mesh-on. In addition, the type of edible plant from which the processed edible plant product in the 10 mesh-pass fraction (preferably the 10 mesh-pass/100 mesh-on fraction) is derived is not limited, but according to one embodiment, one or more types of edible foods selected from the group consisting of vegetables, grains, mushrooms, fruits, potatoes, algae, nuts, legumes, and the like can be used, and vegetables, grains, mushrooms, and nuts are particularly useful. Specific examples thereof are as described above. It should be noted that it is particularly preferable to satisfy the stipulations regarding the edible plants with a 10 mesh-pass fraction (preferably a 10 mesh-pass/100 mesh-on fraction).

While the properties of the processed edible plant product are not limited, the processed edible plant product is preferably one or more selected from edible plant powders, edible plant pastes, or an aqueous extract of an edible plant. For example, the processed edible plant product is preferably a processed product obtained by subjecting an edible plant to a heating treatment (for example, 80°C or higher) such as a drying treatment, a roasting treatment, or a hot water extraction treatment.

·Liquid Medium:

The food product of the present invention contains a liquid medium (which is appropriately referred to as a "medium"). The composition of the liquid medium is not limited, but the liquid medium is usually at least water or an aqueous medium containing water as a main component. In addition, optional components such as various seasonings and food additives, which will be described later, may be contained therein. Further, some (or all) of the above-mentioned mushroom ingredients and/or edible plants may be finely dispersed or dissolved in the liquid medium.

·Features Relating to Sieve Fractionation:

The food product of the present invention can be characterized by a specific mesh-on and/or specific mesh-pass fraction obtained by fractionating the food product with sieves having different mesh openings. In the present disclosure, "mesh-on" refers to a fraction that remains on a sieve of a specific size, and "mesh-pass" refers to a fraction that passes through a sieve of a specific size. For example, "1 mesh-pass" means a fraction that passes through a 1 mesh sieve, and "10 mesh-on" means a fraction that remains on a 10 mesh sieve.

The term "mesh" in the present disclosure is a unit representing the mesh density of a wire mesh, a sieve, a filter, or the like, and represents the number of mesh holes per inch. That is, for example, "1 mesh-pass" refers to a fraction of material that passes through a sieve having a mesh opening of 25.0 mm and a wire diameter of 3.55 mm, and " 10 mesh-on" refers to a fraction of material remaining on a sieve having a mesh opening of 2.00 mm and a wire diameter of 0.90 mm. Specifically, the wire thickness and spacing between meshes of each sieve are numerical values defined by the U.S.A. ASTM E11-04J Standard Specification for Wire Cloth and Sieves for Testing Purposes (for example, 1 mesh corresponds to " 1.00" as defined in the "Alternative" section of Nominal Dimensions, Permissible Variation for Wire Cloth of Standard Testing Sieves (U.S.A.) Standard Series, and likewise, 4 mesh corresponds to "No. 4", 10 mesh corresponds to "No. 10", and 100 mesh corresponds to "No. 100"), or are numerical values equivalent thereto.

In the present disclosure, when the content of a specific mesh-on fraction and/or mesh-pass fraction of a certain food product sample is to be measured, the mass of the food product sample in a wet state is measured. More specifically, a 1-mesh (arbitrary) sieve, a 4-mesh (arbitrary) sieve, a 10-mesh (arbitrary) sieve, and a 100-mesh (arbitrary) sieve are stacked in this order from the top, and 100 g of the mushroom-ingredient-containing food product sample (20°C) to be measured is spread spread thinly and evenly on the stacked sieves, after which a value expressed in mass% is measured using the mass of the residue on each sieve as the numerator and the mass of the entire mushroom-ingredient-containing food product as the denominator, and thereby a content ratio of the mesh-on fraction and the mesh-pass fraction in the food product of the present invention can be measured as a wet mass-based ratio.

In the present disclosure, the term "fraction" of the specific mesh-on fraction and/or the specific mesh-pass fraction means a partial composition of the mushroom-ingredient-containing food product that behaves the same for each property of the specific mesh-on fraction and/or the specific mesh-pass fraction. Such a "fraction" is usually composed of one or more types of ingredients and one or more types of liquid media. Here, it should be noted that a specific mesh-on "fraction" may include not only a composition having a specific mesh-on size, but also a composition having a specific mesh-pass size (for example, a 4 mesh-on fraction may include not only a 4 mesh-on size ingredient but also a 4 mesh-pass size ingredient or liquid medium, and a 10 mesh-pass/100 mesh-on fraction may include not only a 10 mesh-pass/100 mesh-on ingredient but also a 100 mesh-pass size ingredient or liquid medium). This is because, depending on details such as the combination of the ingredient or liquid medium with other coexisting ingredients or liquid media, and properties of the food product sample, there is a possibility that even an ingredient or a liquid medium having a specific mesh-pass size may remain on a sieve of the specific size without passing therethrough. Thus, even a fraction containing an ingredient or a liquid medium having a specific mesh-pass size corresponds to a specific mesh-on fraction as long as the fraction thereof behaves the same as in the case in which the food product sample is subjected to sieve fractionation by the procedures described above, and remains on the sieve having the specific mesh.

The mushrooms and/or edible plants in each fraction sifted through each mesh may be present as a solid ingredient, but some or all thereof may be finely dispersed or dissolved in a liquid medium. In addition, the fractions may be composed only of one or more respectively different types of mushrooms and/or edible plants, may contain one or more of the same type of mushroom and/or edible plant in addition to the one or more respectively different types of mushrooms and/or edible plants, or may all be composed only of one or more of the same type of mushroom and/or edible plant. The fractions preferably contain at least mushrooms and/or edible plants belonging to the same classification, and more preferably contain mushrooms and/or edible plants of the same type.

·Characteristics Relating to Shortest Side Length of Mushroom Ingredient:

The food product of the present invention can be characterized in that when the food product is divided into a plurality of fractions of a specific mesh-on fraction and/or a specific mesh-pass fraction by sieve fractionation, and the mushroom ingredients contained in the food product are divided into a plurality of groups of specific sizes on the basis of the shortest side length thereof, the food product fractions and/or the mushroom ingredient groups satisfy a specific requirement.

In the present disclosure, the term "dimension" refers to the lengths of the width, depth, and height of a virtual cuboid having a minimum volume in which the ingredients are inscribed, and is expressed as "width $\times$ depth $\times$ height".

The term "volume" refers to a value obtained by multiplying the three sides of the width, depth, and height of a virtual cuboid having a minimum volume in which the ingredients are inscribed. The "shortest side length" refers to the length of the smallest side of a virtual cuboid having a minimum volume in which the ingredients are inscribed. For example, when the three sides of the virtual cuboid are 5 mm $\times$ 8 mm $\times$ 8 mm, the shortest side length is 5 mm. When measurements are to be carried out, for example, a mushroom ingredient is collected from a 10 mesh-on fraction using tweezers, and the mushroom ingredient is measured with a ruler. That is, when the mushroom-ingredient-containing food product is sieved using a sieve of a 10 mesh size, the "mushroom ingredient having a shortest side length of greater than 5 mm" described below refers to a mushroom ingredient having a shortest side length of greater than 5 mm when the mushroom ingredient is collected from a 10 mesh-on fraction using tweezers, and the size is measured with a ruler. Similarly, the "mushroom ingredient having a shortest side length of 5 mm or less" described below refers to a mushroom ingredient having a shortest side length of 5 mm or less when the mushroom ingredient is collected from a 10 mesh-on fraction using tweezers, and the size thereof is measured with a ruler. The mesh size is as described above.

In the present disclosure, when the content of the mushroom ingredient having a shortest side length of greater than 5 mm and the content of the mushroom ingredient having a shortest side length of 5 mm or less are measured, the mass of the ingredient in a wet state is measured. More specifically, a 1-mesh sieve and a 10-mesh sieve are stacked in this order from the top, 100 g of the mushroom-ingredient-containing food product sample (20°C) to be measured is thinly and evenly spread on the 1-mesh sieve and left standing for 10 minutes, after which mushroom ingredients are collected with tweezers from the 10 mesh-on fraction, and the size is measured with a ruler. Then, the mushroom ingredient for which the shortest side length is measured as greater than 5 mm with a ruler is used as the mushroom ingredient having a shortest side length of greater than 5 mm. The mushroom ingredient for which the shortest side length is measured as 5 mm or less with a ruler is used as the mushroom ingredient having a shortest side length of 5 mm or less. The 10 mesh-pass fraction is considered as the mass of the entire mushroom-ingredient-containing food product. The value thereof expressed in mass% is obtained as the denominator. By so doing, the content proportion of the mushroom ingredient having a shortest side length of greater than 5 mm and the content proportion of the mushroom ingredient having a shortest side length of 5 mm or less in the food product of the present invention in terms of wet mass can be measured.

In the present disclosure, "in terms of wet mass" (sometimes simply referred to as "based on wet mass") indicates a content ratio of a target component in a sample, the content ratio being calculated using a wet mass of the sample including moisture as a denominator and a content mass of the target component in the sample as a numerator. In addition, in the present disclosure, "in terms of dry mass" (sometimes simply referred to as "based on dry mass") indicates a content ratio of a target component in a sample, the content ratio being calculated using a dry mass of the sample excluding moisture as a denominator and a content mass of the target component in the sample as a numerator. In addition, with regard to the definition of the ratio of the present invention, when a ratio is simply described as "mass%" without any other particular description, such ratio indicates a ratio "in terms of wet mass".

·Content of Mushroom Ingredient Having Shortest Side Length Exceeding Predetermined Lower

Limit:

One of the characteristics of the food product of the present invention is that a mushroom ingredient having a shortest side length greater than 5 mm is contained in the food product at a predetermined proportion or more in terms of wet mass. Specifically, in terms of wet mass, the content of the mushroom ingredient having a shortest side length greater than 5 mm in the food product of the present invention can be, for example, in a range from 1.0 mass% to 60 mass%. More specifically, the lower limit is usually 1.0 mass% or more. In particular, the content is preferably 1.5 mass% or more, more preferably 1.8 mass% or more, and especially preferably 2.0 mass% or more, 2.5 mass% or more, 3.0 mass% or more, 3.5 mass% or more, 4.0 mass% or more, 4.5 mass% or more, 5.0 mass% or more, 6.0 mass% or more, 7.0 mass% or more, 8.0 mass% or more, or 9.0 mass% or more, and is particularly preferably 10.0 mass% or more.

Although the principle thereof is unclear, it is thought that when the shortest side length (which is considered to be oriented in the direction of water flow generated by convection because the resistance is small) exceeds a predetermined value, a complex water flow is generated in the food product, and explosive boiling can be suppressed. On the other hand, the upper limit thereof is not particularly limited, but is usually, for example, 60 mass% or less, or can be set to 50 mass% or less, 40 mass% or less, 30 mass% or less, 26 mass% or less, 20 mass% or less, or 15 mass% or less. Note that the content of the mushroom ingredient having a shortest side length greater than 5 mm in the 10 mesh-on fraction (preferably a 1 mesh-pass/10 mesh-on fraction) preferably satisfies this stipulation.

In the food product of the present invention, the mushroom ingredient accounting for a content of a predetermined proportion or more in terms of wet mass preferably has a shortest side length exceeding a predetermined value. Specifically, in relation to the food product of the present invention, the content may be, for example, in a range from 1.0 mass% to 60 mass% in terms of wet mass. More specifically, with a mushroom ingredient accounting for a content ratio with a lower limit of usually 1.0 mass% or more, 1.5 mass% or more, 1.8 mass% or more, 2.0 mass% or more, 2.5 mass% or more, 3.0 mass% or more, 4.0 mass% or more, 5.0 mass% or more, 6.0 mass% or more, 7.0 mass% or more, 8.0 mass% or more, 9.0 mass% or more, or 10.0 mass% or more, the shortest side length of the mushroom ingredient can be set to a range of, for example, greater than 5.0 mm to less than 25 mm, or from greater than 5.0 mm to 1 mesh-pass (mesh opening of 25 mm, wire diameter of 3.55 mm). More specifically, the mushroom ingredient preferably has a shortest side length with a lower limit that is usually greater than 5.0 mm, or greater than 5.5 mm, greater than 6.0 mm, greater than 6.5 mm, greater than 7.0 mm, greater than 7.5 mm, or greater than 8.0 mm. The content of the mushroom ingredient having a shortest side length greater than 5 mm can suppress explosive boiling by satisfying the above-mentioned lower limit value, and thus such content is preferable. In addition, it is thought that when the shortest side length (which is considered to be oriented in the direction of water flow generated by convection because the resistance is low) satisfies the lower limit value, a complex water flow is generated in the mushroom-ingredient-containing food product, and explosive boiling can be suppressed. Note that the upper limit of the content of such a mushroom ingredient relative to the food product is not particularly limited, but may usually be, for example, 60 mass% or less, 50 mass% or less, 40 mass% or less, 30 mass% or less, 26 mass% or less, 20 mass% or less, or 15 mass% or less. In addition, the upper limit of the shortest side length of the mushroom ingredient is not particularly limited, but from the viewpoint of uniform heating of the ingredient, the upper limit may be, for example, usually less than 25 mm, or set to 1 mesh-pass (mesh opening of 25 mm, wire diameter of 3.55 mm). Note that a mushroom ingredient having a shortest side length exceeding a predetermined value and accounting for a content of a predetermined proportion or more in terms of wet mass in a 10 mesh-on fraction (preferably a 1 mesh-pass/10 mesh-on fraction) preferably satisfies this stipulation.

The food product of the present invention preferably contains a mushroom ingredient having a shortest side length of 5 mm or less at a predetermined proportion or less in terms of wet mass. Specifically, the content of the mushroom ingredient having a shortest side length of 5 mm or less in the mushroom-ingredient-containing food product may be, for example, in a range from 0 mass% to 70 mass% in terms of wet mass. More specifically, the upper limit of the content thereof is preferably, for example, 70 mass% or less because at such a content, explosive boiling can be suppressed. In addition, such an upper limit of the content thereof is preferable because at such a content, the chewing texture of the mushroom ingredient after heat cooking is easily sensed. In particular, the content is preferably 60 mass% or less, 50 mass% or less, 40 mass% or less, 30 mass% or less, 20 mass% or less, 18 mass% or less, 14 mass% or less, 10 mass% or less, 8.5 mass% or less, 7.0 mass% or less, 6.5 mass% or less, 6.0 mass% or less, 5.5 mass% or less, 5.0 mass% or less, or 4.5 mass% or less, and is particularly preferably 4.0 mass% or less. On the other hand, the lower limit is not particularly limited, but may usually be 0 mass% or more, 0.1 mass% or more, or 0.3 mass% or more. Note that the content of the mushroom ingredient having a shortest side length of 5 mm or less in a 10 mesh-pass fraction (preferably a 10 mesh-pass/100 mesh-on fraction) preferably satisfies this stipulation.

In the food product of the present invention, the mushroom ingredient accounting for a content of a predetermined proportion or less in terms of wet mass preferably has a shortest side length of a predetermined value or less. Specifically, in relation to the food product of the present invention, the content may be, for example, in a range from 0 mass% to 70 mass%. More specifically, with a mushroom ingredient accounting for a content with an upper limit of usually 70 mass% or less, 60 mass% or less, 50 mass% or less, 40 mass% or less, 30 mass% or less, 20 mass% or less, 18 mass% or less, 14 mass% or less, 10 mass% or less, 8.5 mass% or less, 7.0 mass% or less, 6.5 mass% or less, 6.0 mass% or less, 5.5 mass% or less, 5.0 mass% or less, 4.5 mass% or less, or 4.0 mass% or less, the shortest side length of the mushroom ingredient can be set to a range of, for example, from greater than 2.0 mm to 5.0 mm, or from greater than 10 mesh-on (mesh opening of 2.00 mm, wire diameter of 0.90 mm) to 5.0 mm or less. More specifically, the mushroom ingredient preferably has a shortest side length with an upper limit that is usually 5.0 mm or less, and in particular, the upper limit is preferably 4.8 mm or less, more preferably 4.4 mm or less, and particularly preferably 4.1 mm or less. The content of the mushroom ingredient having a shortest side length of 5 mm or less can suppress explosive boiling by satisfying the above-mentioned upper limit value, and thus such a content is preferable. In addition, such an upper limit of the content thereof is preferable because at such a content, the chewing texture of the mushroom ingredient after heat cooking is easily sensed. Moreover, when the shortest side length satisfies this upper limit value, explosive boiling can be suppressed, which is preferable. Note that the lower limit of the content of the mushroom ingredient in relation to the food product is not particularly limited, but may usually be, for example, 0 mass% or more, 0.1 mass% or more, or 0.3 mass% or more. In addition, the lower limit of the shortest side length of the mushroom ingredient is also not particularly limited, but the shortest side length usually exceeds 2.0 mm. Alternatively, the shortest side length can be set to 10 mesh-on (mesh opening 2.00 mm, wire diameter 0.90 mm). Note that a mushroom ingredient having a shortest side length of a predetermined value or less and accounting for a content of a predetermined proportion or less in terms of wet mass in a 10 mesh-pass fraction (preferably a 10 mesh-pass/100 mesh-on fraction) preferably satisfies this stipulation.

The food product of the present invention is preferred because the food product contains a mushroom ingredient of a specific size at a predetermined proportion or less in terms of wet mass, thereby suppressing explosive boiling. Specifically, the size of the mushroom ingredient of the specific size may be, for example, in a range from 4 mesh-pass (mesh opening of 4.75 mm, wire diameter of 1.60 mm) to 18 mesh-on (mesh opening of 1.00 mm, wire diameter of 0.56 mm). More specifically, the upper limit can usually be set to 4 mesh-pass (mesh opening of 4.75 mm, wire diameter of 1.60 mm), 5 mesh-pass (mesh opening of 4.00 mm, wire diameter 1.40 mm), or 6 mesh-pass (mesh opening of 3.35 mm, wire diameter of 1.25 mm). The lower limit of the size of the mushroom ingredient having a specific size may usually be, for example, 10 mesh-on (mesh opening of 2.00 mm, wire diameter of 0.90 mm), 12 mesh-on (mesh opening of 1.70 mm, wire diameter of 0.80 mm), 14 mesh-on (mesh opening of 1.40 mm, wire diameter of 0.71 mm), 16 mesh-on (mesh opening of 1.18 mm, wire diameter of 0.63 mm), or 18 mesh-on (mesh opening of 1.00 mm, wire diameter of 0.56 mm). In relation to the mushroom-ingredient-containing food product, the content of the mushroom ingredient having a specific size may be, for example, in a range from 0 mass% to 70 mass% in terms of wet mass. More specifically, the upper limit is, for example, usually 70 mass% or less, preferably 60 mass% or less, 50 mass% or less, 40 mass% or less, or 30 mass% or less, more preferably 20 mass% or less, 18 mass% or less, 14 mass% or less, 10 mass% or less, 8.5 mass% or less, 7.0 mass% or less, 6.5 mass% or less, 6.0 mass% or less, 5.5 mass% or less, 5.0 mass% or less, or 4.5 mass% or less, and particularly preferably 4.0 mass% or less. On the other hand, the lower limit is not particularly limited, but may usually be, for example, 0 mass% or more, 0.1 mass% or more, or 0.3 mass% or more.

·Volume-Based Characteristics of Mushroom Ingredient:

In the food product of the present invention, a mushroom ingredient having a volume greater than 125 $mm^3$ is preferably contained in the mushroom-ingredient-containing food product at a predetermined proportion or more in terms of wet mass. Specifically, the content of the mushroom ingredient having a volume greater than 125 $mm^3$ in the mushroom-ingredient-containing food product may be, for example, in a range from 1.0 mass% to 60 mass% in terms of wet mass. More specifically, the lower limit of the content of such a mushroom ingredient is 1.0 mass% or more. In particular, the content is preferably 1.5 mass% or more, more preferably 1.8 mass% or more, and especially preferably 2.0 mass% or more, 2.5 mass% or more, 3.0 mass% or more, 3.5 mass% or more, 4.0 mass% or more, 4.5 mass% or more, 5.0 mass% or more, 6.0 mass% or more, 7.0 mass% or more, 8.0 mass% or more, or 9.0 mass% or more, and is particularly preferably 10.0 mass% or more. Setting the content to such a proportion can suppress explosive boiling, and thus such a content is preferable. Although the principle thereof is unclear, it is thought that when the content of the mushroom ingredient having a volume exceeding a predetermined value satisfies the lower limit value, a complex water flow is generated in the mushroom-ingredient-containing food product, and explosive boiling can be suppressed. On the other hand, the upper limit thereof is not particularly limited, but can usually be set to 60 mass% or less, 50 mass% or less, 40 mass% or less, 30 mass% or less, 26 mass% or less, 20 mass% or less, or 15 mass% or less. Note that the content of the mushroom ingredient having a volume greater than 125 $mm^3$ in a 10 mesh-on fraction (preferably a 1 mesh-pass/10 mesh-on fraction) preferably satisfies this stipulation.

In addition, the volume of a mushroom ingredient contained at a predetermined proportion in terms of wet mass in the food product of the present invention is preferably set to a predetermined volume or higher, to suppress explosive boiling. Specifically, the proportion of such a mushroom ingredient can be set to a range of, for example, from 1.0 mass% to 60 mass% in the food product of the present invention. More specifically, a mushroom ingredient contained at a lower limit proportion of usually 1.0 mass% or more, 1.5 mass% or more, 1.8 mass% or more, 2.0 mass% or more, 2.5 mass% or more, 3.0 mass% or more, 4.0 mass% or more, 5.0 mass% or more, 6.0 mass% or more, 7.0 mass% or more, 8.0 mass% or more, 9.0 mass% or more, or 10.0 mass% or more, can be set to have a volume within a range of, for example, greater than 125 mm$^3$ to 15 cm$^3$ or less. More specifically, the lower limit of the volume of the mushroom ingredient is usually greater than 125 mm$^3$, more preferably greater than 190 mm$^3$, even more preferably greater than 210 mm$^3$, further preferably greater than 250 mm$^3$, or greater than 300 mm$^3$, or greater than 400 mm$^3$, and is particularly preferably greater than 510 mm$^3$. Although the principle thereof is unclear, it is thought that when the volume of the mushroom ingredient exceeds a predetermined value, the volume of the mushroom ingredient subjected to convection increases, a complex water flow is generated in the mushroom-ingredient-containing food product, and explosive boiling can be suppressed. Note that the upper limit of the content of such a mushroom ingredient relative to the food product is not particularly limited, but may usually be, for example, 60 mass% or less, 50 mass% or less, 40 mass% or less, 30 mass% or less, 26 mass% or less, 20 mass% or less, or 15 mass% or less. The upper limit of the volume of such a mushroom ingredient is not particularly limited, but, for example, is usually preferably 15 cm$^3$ or less from the viewpoint of uniform heating of the ingredient. Note that a mushroom ingredient having a volume exceeding a predetermined value and accounting for a content of a predetermined proportion or greater in terms of wet mass in a 10 mesh-pass fraction (preferably a 10 mesh-pass/100 mesh-on fraction) preferably satisfies this stipulation.

Also note that in the present disclosure, the term "volume" refers to a numerical value obtained by multiplying the lengths of three sides (width, depth, and height) of a virtual cuboid having a minimum volume in which the ingredients are inscribed. For example, when the three sides of the virtual cuboid are 8 mm × 8 mm × 8 mm, the volume is 512 mm$^3$.

·Content Ratio of Mushroom Ingredient Having Shortest Side Length of 5 mm or Less to Mushroom Ingredient Having Shortest Side Length Greater than 5 mm in 10 mesh-on Fraction:

One of the characteristics of the food product of the present invention is that a content ratio of the mushroom ingredient having a shortest side length of 5 mm or less to the mushroom ingredient having a shortest side length greater than 5 mm in a 10 mesh-on (preferably a 1 mesh-pass/10 mesh-on) fraction is a predetermined value or less in terms of wet mass. Specifically, the content ratio of the mushroom ingredient having a shortest side length of 5 mm or less to the mushroom ingredient having a shortest side length greater than 5 mm in a 10 mesh-on (preferably a 1 mesh-pass/10 mesh-on) fraction of the food product of the present invention (that is, a value of {(content of mushroom ingredient having a shortest side length of 5 mm or less)/(content of mushroom ingredient having a shortest side length greater than 5 mm)}) can be set, for example, to a range from 0 times to 20 times in terms of wet mass. More specifically, the upper limit is usually 20 times or less. In particular, the content ratio thereof is preferably 18 times or less, more preferably 16 times or less, particularly preferably 14 times or less, or 12 times or less, 10 times or less, 8 times or less, 6 times or less, 4 times or less, 3 times or less, 2 times or less, 1.8 times or less, 1.6 times or less, 1.4 times or less, 1.2 times or less, 1.0 times or less, 0.8 times or less, 0.7 times or less, or 0.6 times or less, and is particularly preferably 0.5 times or less. Through this characteristic, explosive boiling of the food product of the present invention is markedly inhibited. In addition, the chewing texture of the mushroom ingredient after heat cooking is easily sensed. Although the principle thereof is unclear, it is thought that by containing a predetermined proportion of a mushroom ingredient having a shortest side length (which is considered to be oriented in the direction of water flow generated by convection because the resistance is small) exceeding a predetermined value, a complex water flow is generated in the mushroom-ingredient-containing food product, explosive boiling can be suppressed, and the chewing texture of the mushroom ingredient after heat cooking is easily sensed. The lower limit of the content ratio is not particularly limited, but may usually be, for example, 0 times or more, or 0.01 times or more. From the viewpoint of uniform heating of the mushroom ingredient, the size of the mushroom ingredient having a shortest side length greater than 5 mm may be such that, for example, the shortest side length is in a range of greater than 2.0 mm to less than 25 mm, or in a range of 1 mesh-pass (mesh opening of 25 mm, wire diameter of 3.55 mm)/10 mesh-on (mesh opening of 2.00 mm, wire diameter of 0.90 mm). More specifically, the upper limit can usually be set such that, for example, the shortest side length is less than 25 mm, or is 1 mesh-pass (mesh opening of 25 mm, wire diameter of 3.55 mm). In addition, the lower limit of the size of the mushroom ingredient having a shortest side length of 5 mm or less may usually be set such that, for example, the shortest side length exceeds 2.0 mm or is 10 mesh-on (mesh opening of 2.00 mm, wire diameter of 0.90 mm).

The food product of the present invention preferably contains an edible plant ingredient of a specific size. Specifically, the 10 mesh-on (preferably, 1 mesh-pass/10 mesh-on) edible-plant-containing ingredient fraction can be set in a range of, for example, greater than 1.0 mass% to 80 mass% in terms of wet mass in the mushroom-ingredient-containing food product. More specifically, when the lower limit thereof is set to greater than 1.0 mass%, the content ratio of the mushroom ingredient having a shortest side length of 5 mm or less to the mushroom ingredient having a shortest side length greater than 5 mm (that is, (content of the mushroom ingredient having a shortest side length of 5 mm or less)/(content of the mushroom ingredient having a shortest side length greater than 5 mm)) can be adjusted, explosive boiling can be suppressed, and the chewing texture of the mushroom ingredients after heat cooking can be easily sensed. Thus, such a lower limit is preferable. In particular, the lower limit thereof is preferably greater than 1.5 mass%, more preferably greater than 1.7 mass%, especially preferably greater than 2.0 mass%, greater than 2.5 mass%, greater than 3.0 mass%, greater than 3.5 mass%, greater than 4.0 mass%, greater than 4.5 mass%, greater than 5.0 mass%, greater than 6.0 mass%, greater than 7.0 mass%, greater than 8.0 mass%, or greater than 9.0 mass%, and is particularly preferably greater than 10 mass%. The upper limit is not particularly limited, but may usually be set to 80 mass% or less, 70 mass% or less, 60 mass% or less, or 50 mass% or less.

In the food product of the present invention, in addition to setting the content of the edible plant ingredient to the proportion described above, the content ratio of the mushroom ingredient having a shortest side length of 5 mm or less in the 10 mesh-on edible-plant-containing ingredient fraction (that is, (content of the mushroom ingredient having a shortest side length of 5 mm or less)/(10 mesh-on edible-plant-containing ingredient fraction)) is preferably set to a predetermined proportion or less in terms of wet mass in the mushroom-ingredient-containing food product in order to sufficiently exhibit the effect of the present invention. Specifically, for example, the content may be set to a range from 0 mass% to 95 mass%. More specifically, the upper limit thereof is usually 95 mass% or less, and in particular, the upper limit is preferably 90 mass% or less, more preferably 81 mass% or less, and even more preferably 75 mass% or less, 45 mass% or less, 30 mass% or less, 22 mass% or less, 10 mass% or less, or 6 mass% or less. On the other hand, the lower limit thereof is not particularly limited, but may usually be, for example, 0 mass% or more, 0.1 mass% or more, or 1 mass% or more.

The food product of the present invention preferably contains an edible plant of a specific size. When the food product of the present invention contains an edible plant of a specific size, the viscosity (a value measured using a rapid visco analyzer) described below is adjusted to a predetermined value, and thus containing an edible plant of a specific size is preferable. Specifically, a 10 mesh-pass (preferably, 10 mesh-pass/100 mesh-on) edible-plant-containing fraction can be set in a range of, for example, from greater than 1.0 mass% to 80 mass% in terms of wet mass in the mushroom-ingredient-containing food product. More specifically, the lower limit thereof is preferably greater than 1.0 mass%. In particular, the lower limit thereof is preferably greater than 1.5 mass%, more preferably greater than 1.7 mass%, and especially preferably greater than 2.0 mass%, greater than 2.5 mass%, greater than 3.0 mass%, greater than 3.5 mass%, greater than 4.0 mass%, greater than 4.5 mass%, greater than 5.0 mass%, greater than 6.0 mass%, greater than 7.0 mass%, greater than 8.0 mass%, or greater than 9.0 mass%, and is particularly preferably greater than 10.0 mass%. The upper limit is not particularly limited, and may usually be, for example, 80 mass% or less, 70 mass% or less, 60 mass% or less, or 50 mass% or less.

The food product of the present invention preferably contains at least a predetermined proportion of an edible plant (which may be another edible plant other than a starch-containing edible plant, or may be a sum total of the other edible plant and the starch-containing edible plant) in a 10 mesh-pass fraction in terms of wet mass. This is because the viscosity (a value measured using a rapid visco analyzer) described below is adjusted to a predetermined value by containing the edible plant in the fraction. Specifically, the content of the edible plant in the 10 mesh-pass fraction can be, for example, in a range from 0.01 mass% to 80 mass% in terms of wet mass. More specifically, in some cases the lower limit of the content thereof may preferably be 0.01 mass% or greater. In particular, the content thereof is preferably 0.1 mass% or more, more preferably 0.5 mass% or more, even more preferably 1.0 mass% or more, 1.5 mass% or more, 2.0 mass% or more, or 2.5 mass% or more, and is particularly preferably 3.0 mass% or more. On the other hand, the upper limit is not particularly limited, but may usually be 80 mass% or less, 70 mass% or less, 60 mass% or less, or 50 mass% or less. In particular, the edible plant (which may be another edible plant other than a starch-containing edible plant, or may be a sum total of the other edible plant and the starch-containing edible plant) in a 10 mesh-pass/100 mesh-on fraction preferably satisfies this stipulation.

Furthermore, the food product of the present invention preferably contains mushrooms in the mushroom-ingredient-containing food product at a predetermined ratio or more in terms of wet mass. Specifically, the content of mushrooms in the mushroom-ingredient-containing food product may be, for example, in a range from greater than 5.0 mass% to 80 mass% in terms of wet mass. More specifically, the lower limit thereof is preferably greater than 5.0 mass%. In particular, the lower limit is preferably greater than 5.5 mass%, more preferably greater than 6.0 mass%, even more preferably greater than 6.5 mass%, or greater than 7.0 mass%, or greater than 8.0 mass%, or greater than 9.0 mass%, or greater than 10 mass%, and is particularly preferably greater than 11 mass%. The upper limit is not particularly limited, but may usually be set to 80 mass% or less, 70 mass% or less, 60 mass% or less, 50 mass% or less, or 40 mass% or less. Note that the mushrooms in the 10 mesh-on fraction (preferably the 1 mesh-pass/10 mesh-on fraction) preferably satisfy this stipulation.

In the food product of the present invention, the mushrooms may be contained in the mushroom-ingredient-containing food product at a predetermined ratio in terms of wet mass (for example, in a range of greater than 5.0 mass% to 80 mass%; more specifically, the lower limit is usually greater than 5.0 mass%, greater than 5.5 mass%, greater than 6.0 mass%, greater than 6.5 mass%, greater than 7.0 mass%, greater than 8.0 mass%, greater than 9.0 mass%, greater than 10 mass%, or greater than 11 mass%, and the upper limit can be set to 80 mass% or less, 70 mass% or less, 60 mass% or less, 50 mass% or less or 40 mass% or less). However, the content ratio of the mushroom ingredient having a shortest side length of 5 mm or less to the mushroom ingredient having a shortest side length of greater than 5 mm (that is, (content of the mushroom ingredient having a shortest side length of 5 mm or less)/(content of the mushroom ingredient having a shortest side length of greater than 5 mm)) can be set, for example, to a range from 0 times to 20 times in terms of wet mass. More specifically, the upper limit is 20 times or less, and preferably 18 times or less, 16 times or less, 14 times or less, 12 times or less, 10 times or less, 8 times or less, 6 times or less, 4 times or less, 3 times or less, 2 times or less, 1.8 times or less, 1.6 times or less, 1.4 times or less, 1.2 times or less, 1.0 times or less, 0.8 times or less, 0.7 times or less, 0.6 times or less, or 0.5 times or less). The lower limit of the content ratio thereof is not particularly limited, but is more preferably, for example, 0 times or more, or 0.01 times or more because the effect of the present invention is sufficiently exhibited at such a content ratio.

·Viscosity Property of 10 Mesh-Pass Fraction According to Rapid Visco Analyzer (RVA):

In the food product of the present invention, the viscosity property of the 10 mesh-pass fraction measured using a rapid visco analyzer (RVA) preferably satisfies the various characteristics described below.

The rapid visco analyzer (RVA) is a device for measuring an irreversible viscosity profile when a sample is heated and cooled under a predetermined temperature profile while being stirred. Any device can be used as the RVA, so long as the device can increase the temperature of the object to be measured to 95°C, and a specific example thereof is the RVA 4800 available from Perten Instruments. The measurement principle of this device is as follows. A sample is placed in an aluminum cup for measurement (volume: approximately 70 mL), measurements are started at 50°C, the rotational speed is set to 960 rpm from the startup of measurements to 10 seconds after measurements are started, the rotational speed is set to 160 rpm from 10 seconds after measurements are started until measurements are completed, and while the temperature is increased and lowered on the basis of a predetermined temperature profile, the sample is stirred by rotating two paddles (blades) measuring around 13 mm × 19 mm, and the viscosity property is measured based on the resistance applied to the paddles. Here, the resistance applied to the paddle increases when the viscosity of the sample is high, and the resistance applied to the paddle decreases when the viscosity is low, and therefore the viscosity property of the sample can be measured on the basis of the resistance applied to the paddles. Note that in the below-described "Method $\alpha$", that is, in the below-described measurement method in which 25 g of a measurement sample is heated from 50°C to 80°C (or at least 85°C, or at least 90°C, or at least 95°C) at a temperature increase rate of 6°C/min, 50°C refers to the temperature at the time point when the measurement sample reaches 50°C. For example, when 25 g of the measurement sample is maintained at 50°C for an arbitrary period of time, the viscosity refers to a viscosity at the time point when the temperature of the sample reaches 50°C. The RVA viscosity measurement of the food product of the present invention is carried out by weighing 25 g of a 10 mesh-pass fraction in terms of wet mass into an aluminum cup for RVA measurements, and then subjecting the food product as is to the RVA viscosity measurements according to the "Method $\alpha$" described below.

The food product of the present invention is characterized in that when the viscosity of 25 g of a measurement sample of the 10 mesh-pass fraction is measured while the temperature is increased from 50°C to at least 80°C (or at least 85°C, or at least 90°C, or at least 95°C) at a temperature increase rate of 6°C/min (such a measurement method is appropriately referred to as the "Method $\alpha$") using RVA, the maximum viscosity at the time point when the sample temperature reaches 80°C is less than a predetermined value. Note that in the present disclosure, the maximum viscosity at the time point when the sample temperature reaches a specific temperature (for example, 80°C) using RVA refers to the maximum viscosity value from the time point when the sample is 50°C to the time point when the sample reaches the specific temperature (for example, 80°C). Specifically, the maximum viscosity of the 10 mesh-pass fraction at the time point when the sample reaches 80°C may be, for example, in a range from 1cP to 1200 cP. More specifically, the upper limit thereof is usually less than the 1200 cP. In particular, the upper limit of the maximum viscosity is preferably less than 1100 cP, or less than 1000 cP, or less than 900 cP, or less than 830 cP, or less than 800 cP, or less than 730 cP, or less than 700 cP, or less than 640 cP, or less than 600 cP, or less than 500 cP, or less than 400 cP, or less than 300 cP, or less than 200 cP, and is particularly preferably less than 100 cP. When the viscosity is less than the upper limit value described above, thermal convection during heating becomes uniform, the ingredients are easily heated uniformly, and the chewing texture of the mushroom ingredients after heat cooking is easily sensed, and thus the viscosity is preferably set to less than the above-mentioned upper limit value. On the other hand, when the viscosity is equal to or higher than the upper limit value, the chewing texture of the mushroom ingredients after heat cooking may not be sensed in some cases. Although the principle thereof is unclear, it is thought that when the viscosity value exceeds a predetermined value, thermal convection during heating becomes insufficient, and thereby the mushroom ingredients are overheated, and the chewing texture is not easily sensed due to bursting of the mushroom ingredients. The lower limit is not particularly limited, but may usually be set to 1 cP or higher, 3 cP or higher, 5 cP or higher, 10 cP or higher, 30 cp or higher, or 65 cp or higher. In the food product of the present invention, the maximum viscosity of the 10 mesh-pass fraction when a temperature of 85°C, 90°C, or 95°C is reached may be in the above viscosity range. Regarding the stipulation of the maximum viscosity, when a step (ii) of the production method described below is carried out, the stipulation may be satisfied after the step (ii), but the stipulation is preferably satisfied both before and after the step (ii).

When a 10 mesh-pass fraction of the food product of the present invention is measured in accordance with the "Method $\alpha$" using a rapid visco analyzer (RVA), preferably the ratio of the viscosity (cP) at 80°C (hereinafter, may be referred to as a "value $\beta$") to the viscosity (cP) at 50°C (hereinafter, may be referred to as a "value $\alpha$") (hereinafter, the ratio thereof may be referred to as "value $\beta$/value $\alpha$" or as "$\beta/\alpha$") is equal to or less than a predetermined value, since thermal convection during heating becomes uniform, the ingredients are easily heated uniformly, and the chewing texture of the mushroom ingredients after heat cooking can be easily sensed. On the other hand, when the ratio "$\beta/\alpha$" exceeds the following upper limit, the chewing texture of the mushroom ingredients after heat cooking may not be sensed in some cases. Although the principle thereof is unclear, it is thought that when the value of the ratio thereof exceeds a predetermined value, thermal convection during heating becomes insufficient, and thereby the mushroom ingredients are overheated, and the chewing texture is not easily sensed due to bursting of the mushroom ingredients. Specifically, the ratio "$\beta/\alpha$" of the 10 mesh-pass fraction of the food product of the present invention can be, for example, in a range from 0.10 to 5.0. More specifically, the upper limit is usually preferably 5.0 or less, 4.5 or less, 4.0 or less, 3.5 or less, 3.0 or less, 2.5 or less, 2.0 or less, 1.7 or less, 1.4 or less, 1.0 or less, or 0.9 or less. On the other hand, in a mushroom-ingredient-containing food product that contains starch granules, a gelatinizing phenomenon in which the starch granules absorb water and swell when heated from 50°C to 80°C is observed with this parameter, and the viscosity increases. Therefore, the viscosity (value $\beta$) at 80°C gets higher than the viscosity (value $\alpha$) at 50°C, in which case the probability that "$\beta/\alpha$" exceeds 2.0 is higher, and particularly, the probability that "$\beta/\alpha$" exceeds 1.0 is higher. On the other hand, the lower limit can usually be 0.10 or higher. In particular, the lower limit is preferably 0.20 or higher, more preferably 0.30 or higher, and even more preferably 0.40 or higher, 0.45 or higher, 0.50 or higher, 0.55 or higher, or 0.60 or higher. Regarding the stipulation pertaining to "$\beta/\alpha$", when the step (ii) of the production method described below is carried out, the stipulation may be satisfied after the step (ii), but the stipulation is preferably satisfied both before and after the step (ii).

The "$\alpha$ value" of the 10 mesh-pass fraction in the food product of the present invention can be, for example, in a range from 0.1 cP to less than 1200 cP. More specifically, the upper limit is preferably less than 1200 cP, less than 1100 cP, less than 1000 cP, or less than 900 cP. The lower limit is not particularly limited, and may usually be, for example, 0.1 cP or higher, 1 cP or higher, 5 cP or higher, 10 cP or higher, or 15 cP or higher.

The "$\beta$ value" of the 10 mesh-pass fraction in the food product of the present invention can be, for example, in a range from 0.1 cP to less than 1200 cP. More specifically, the upper limit is preferably less than 1200 cP, less than 1100 cP, less than 1000 cP, or less than 900 cP. The lower limit is not particularly limited, and may usually be, for example, 0.1 cP or higher, 1 cP or higher, 3 cP or higher, or 9 cP or higher. Note that it is sufficient that the value $\alpha$ satisfies the above-described range, or that the value $\beta$ satisfies the above-described range, but it is preferable that both the value $\alpha$ and the value $\beta$ satisfy the above ranges. Further, it is preferable that the ratio of "$\beta/\alpha$" is satisfied.

Also, when the 10 mesh-pass fraction of the food product of the present invention is measured by the "Method $\alpha$" using a rapid visco analyzer, preferably a ratio of the viscosity (cP) at any temperature of 85°C or higher (hereinafter, the viscosity thereof may be referred to as a "value $\gamma$") to the viscosity (cP) at 50°C (hereinafter, the viscosity thereof may be referred to as a "value $\alpha$") (hereinafter, the ratio thereof may be referred to as a ratio of "value $\gamma$/value $\alpha$" or as "$\gamma/\alpha$") is a predetermined value or less, since the thermal convection during heating becomes uniform, and the ingredients can be uniformly heated. In addition, the chewing texture of the heat-cooked mushroom ingredients is sensed, and thus such a ratio is preferable. On the other hand, when the ratio "$\gamma/\alpha$" exceeds the predetermined value, the chewing texture of the heat-cooked mushroom ingredients may not be sensed. Although the principle thereof is unclear, it is thought that when the value of the ratio "$\gamma/\alpha$" exceeds the predetermined value, thermal convection during heating becomes insufficient, and thereby the mushroom ingredients are overheated, and the chewing texture is not easily sensed due to bursting of the mushroom ingredients. Specifically, the ratio "$\gamma/\alpha$" of the 10 mesh-pass fraction can be, for example, in a range from 0.10 to 5.0. More specifically, the upper limit thereof is preferably 5.0 or less, 4.5 or less, 4.0 or less, 3.5 or less, 3.0 or less, 2.5 or less, 2.0 or less, 1.7 or less, 1.4 or less, 1.0 or less, or 0.9 or less. When the mushroom-ingredient-containing food product contains starch granules and is heated from 50°C to 95°C, a gelatinizing phenomenon in which the starch granules absorb water and swell is observed, and the viscosity increases. Therefore, the value $\gamma$ becomes higher than the value $\alpha$, and the probability that "$\gamma/\alpha$" exceeds 2.0 increases, and in particular, the probability that "$\gamma/\alpha$" exceeds 1.0 increases. On the other hand, the lower limit is not limited, but may usually be, for example, 0.10 or higher, 0.20 or higher, 0.30 or higher, 0.40 or higher, 0.45 or higher, 0.50 or higher, 0.55 or higher, or 0.60 or higher. Note that the value $\gamma$ may be the viscosity at 85°C, 90°C, or 95°C, Regarding the stipulation pertaining to "$\gamma/\alpha$", when the step (ii) of the production method described below is carried out, the stipulation may be satisfied after the step (ii), but the stipulation is preferably satisfied both before and after the step (ii).

·10 Mesh-On Fraction and 10 Mesh-Pass Fraction:

The food product of the present invention preferably contains a 10 mesh-on (preferably, a 1 mesh-pass/10 mesh-on) fraction at a predetermined proportion. Specifically, the 10 mesh-on (preferably, 1 mesh-pass/10 mesh-on) edible-plant-containing ingredient fraction can be set in a range of, for example, greater than 1.0 mass% to 80 mass% in terms of wet mass in the mushroom-ingredient-containing food product. More specifically, the lower limit thereof is greater than 1.0 mass%, and in particular, the lower limit is preferably greater than 1.5 mass%, more preferably greater than 1.7 mass%, even more preferably greater than 2.0 mass%, or greater than 2.5 mass%, or greater than 3.0 mass%, or greater than 3.5 mass%, or greater than 4.0 mass%, or greater than 4.5 mass%, or greater than 5.0 mass%, or greater than 6.0 mass%, or greater than 7.0 mass%, or greater than 8.0 mass%, or greater than 9.0 mass%, and is particularly preferably greater than 10 mass%. The upper limit is not particularly limited, but may usually be set to 80 mass% or less, 70 mass% or less, 60 mass% or less, or 50 mass% or less.

The food product of the present invention preferably contains a 10 mesh-pass fraction (preferably, a 10 mesh-pass/100-mesh on fraction) at a predetermined ratio. Specifically, a 10 mesh-pass (preferably, 10 mesh-pass/100 mesh-on) edible-plant-containing fraction can be set in a range of, for example, from greater than 1.0 mass% to 80 mass% in terms of wet mass in the mushroom-ingredient-containing food product. More specifically, the lower limit thereof is greater than 1.0 mass%, and in particular, the lower limit is preferably greater than 1.5 mass%, more preferably greater than 1.7 mass%, even more preferably greater than 2.0 mass%, or greater than 2.5 mass%, or greater than 3.0 mass%, or greater than 3.5 mass%, or greater than 4.0 mass%, or greater than 4.5 mass%, or greater than 5.0 mass%, or greater than 6.0 mass%, or greater than 7.0 mass%, or greater than 8.0 mass%, or greater than 9.0 mass%, and is particularly preferably greater than 10 mass%. The upper limit is not particularly limited, but may usually be set to 80 mass% or less, 70 mass% or less, 60 mass% or less, or 50 mass% or less.

The 10 mesh-on (preferably, 1 mesh-pass/10 mesh-on) fraction is composed of a solid content (ingredients) and a medium, and the proportion of the solid content in the 10 mesh-on (preferably, 1 mesh-pass/10 mesh-on) fraction is preferably a predetermined proportion or more in terms of wet mass. Specifically, the proportion of the solid content in terms of wet mass may be in a range of, for example, from 50 mass% or more to 100 mass%, or from 50 mass% or more to 100 mass% or less. More specifically, the lower limit is usually 50 mass% or more, and in particular, the lower limit is preferably 55 mass% or more, more preferably 60 mass% or more, and particularly preferably 65 mass% or more, 70 mass% or more, 80 mass% or more, 90 mass% or more, or 100 mass%. On the other hand, the upper limit thereof is not particularly limited, but is usually 100 mass% or 100 mass% or less.

The 10 mesh-pass (preferably, 10 mesh-pass/100 mesh-on) fraction is composed of a solid content and a medium, and the proportion of the medium in the 10 mesh-pass (preferably, 10 mesh-pass/100 mesh-on) fraction is preferably a predetermined proportion or more in terms of wet mass. Specifically, the proportion of the solid content in terms of wet mass may be in a range of, for example, from 50 mass% or more to 100 mass%, or from 50 mass% or more to 100 mass% or less. More specifically, the lower limit is usually 50 mass% or more, and is preferably 55 mass% or more, 60 mass% or more, 65 mass% or more, 70 mass% or more, 80 mass% or more, 90 mass% or more, or 100 mass%. On the other hand, the upper limit thereof is not particularly limited, but may be usually 100 mass% or 100 mass% or less.

That is, the media of these fractions may be mutually the same or different. In addition, each fraction may contain only one type of medium, or may contain two or more types of media in any combination and ratio. The type of each medium is also not limited, and the media can be arbitrarily selected from among various media such as water and other such aqueous media, water-miscible organic media, water-immiscible lipophilic organic media, emulsified media (for example, oil-in-water type (O/W type), water-in-oil type (W/O type), composite emulsions in which these are further dispersed (O/W/O type and W/O/type)), and liquid fats and oils. In addition, the liquid contained in the edible plants constituting the ingredients may be contained as a medium in each fraction, or conversely, the medium may be contained as a part of the ingredients in each fraction by permeating the ingredients. Phase separation such as separation of an aqueous phase and an oil phase may occur within each fraction and/or between a plurality of fractions.

·Insoluble Dietary Fiber:

The food product of the present invention preferably contains, in the 10 mesh-pass fraction, an insoluble dietary fiber at a predetermined proportion or more in terms of wet mass. This is because the above-described viscosity (a value measured using a rapid visco analyzer) is adjusted to a predetermined value when an insoluble dietary fiber is contained in the fraction. Specifically, the content of the insoluble dietary fiber in the 10 mesh-pass fraction can be set, for example, in a range from 0.001 mass% to 40 mass% in terms of wet mass. More specifically, the lower limit of the content thereof is preferably 0.001 mass% or more in some cases. In particular, in some cases the lower limit is preferably 0.01 mass% or more, more preferably 0.1 mass% or more, even more preferably 0.5 mass% or more, 1.0 mass% or more, 1.5 mass% or more, 2.0 mass% or more, or 2.5 mass% or more, and is particularly preferably 3.0 mass% or more. On the other hand, the upper limit is not particularly limited, but may usually be 40 mass% or less, 30 mass% or less, 10 mass% or less, or 5 mass% or less. However, the content of insoluble dietary fiber in the fraction is not limited as long as the viscosity measured using the above-described RVA satisfies the range described above. Note that to measure the total amount of dietary fiber and the amount of insoluble dietary fiber, a method generally used for measuring components of a food product can be used, and for example, a measurement method according to the method described in the "Standard Tables of Food Composition in Japan" can be used. Specifically, as a method for quantitatively determining dietary fiber and insoluble dietary fiber in a food product, a method of subjecting a sample to a modified Prosky method is used.

Note that a ratio of the proportion in terms of wet mass of the insoluble dietary fiber derived from the mushroom ingredient having a shortest side length greater than 5 mm to the proportion in terms of wet mass of insoluble dietary fiber contained in the food product of the present invention (for example, the proportion thereof may be in a range from 0.001 mass% to 40 mass%; and more specifically, the lower limit is usually 0.001 mass% or more, 0.01 mass% or more, 0.1 mass% or more, 0.5 mass% or more, 1.0 mass% or more, 1.5 mass% or more, 2.0 mass% or more, 2.5 mass% or more, or 3.0 mass% or more, and the upper limit is 40 mass% or less, 30 mass% or less, 10 mass% or less, or 5 mass% or less) (that is, a ratio of (the proportion in terms of wet mass of insoluble dietary fiber derived from the mushroom ingredient having a shortest side length greater than 5 mm)/(the proportion in terms of wet mass of insoluble dietary fiber contained in the mushroom-ingredient-containing food product)) is, for example, in a range from 2.0 to 100. More specifically, the lower limit of the ratio thereof is preferably 2.0 or greater. In particular, the lower limit is preferably 2.5 or greater, more preferably 3.0 or greater, even more preferably 3.5 or greater, 4.0 or greater, 4.5 or greater, of 5.0 or greater, and particularly preferably 5.5 or greater. On the other hand, the upper limit is not particularly limited, but can usually be 100 or less, 90 or less, or 80 or less. In particular, the ratio of the content of the insoluble dietary fiber derived from the mushroom ingredient having a shortest side length greater than 5 mm to the content proportion in terms of wet mass of the insoluble dietary fiber contained in the 10 mesh-on fraction (that is, the ratio of (the proportion in terms of wet mass of insoluble dietary fiber derived from the mushroom ingredient having a shortest side length greater than 5 mm)/(the proportion in terms of wet mass of insoluble dietary fiber contained in the 10 mesh-on fraction)) is preferably within this range.

The food product of the present invention may contain insoluble dietary fiber in the 10 mesh-on fraction and/or the 10 mesh-pass fraction, and with regard to the content of the insoluble dietary fiber in these fractions, the insoluble dietary fiber may be contained alone, or the insoluble dietary fiber may be contained in the form of an edible plant containing an insoluble dietary fiber localized site or in the form of a processed product. However, preferably, both an insoluble dietary fiber localized site and other sites of the same type of edible plants are contained, and particularly preferably, both an insoluble dietary fiber localized site and other sites of the same individual edible plant are contained. With respect to the edible plants of the same type or the same individual edible plant, the edible plant containing an insoluble dietary fiber localized site or the processed product thereof may separately contain the insoluble dietary fiber localized site and the other sites in the edible plant (or processed product thereof), or the edible plant (or processed product thereof) containing the insoluble dietary fiber localized site may be contained.

In the present disclosure, the "insoluble dietary fiber localized site" of a certain edible plant means a site where the insoluble dietary fiber is localized in the edible plant, or in other words, a site having a relatively higher insoluble dietary fiber content proportion than the edible portion of the edible plant. More specifically, the "insoluble dietary fiber localized site" of a certain edible plant refers to a site having an insoluble dietary fiber content proportion of, for example, usually 1.1 times or more, 1.2 times or more, 1.3 times or more, 1.4 times or more, 1.5 times or more, 1.6 times or more, 1.7 times or more, 1.8 times or more, 1.9 times or more, or 2.0 times or more than that of the edible portion of the edible plant in a dry state. For example, the seeds and/or skin of a tomato having an insoluble dietary fiber content proportion that is relatively higher than the insoluble dietary fiber content proportion of the edible portion (such as the flesh part) corresponds to the insoluble dietary fiber localized site.

·Starch Content of 10 Mesh-Pass Fraction:

In the food product of the present invention, the starch content in the 10 mesh-pass fraction is preferably not more than a predetermined proportion. Specifically, the starch content in the fraction can be, for example, in a range from 0 mass% to 1.0 mass% in terms of wet mass. More specifically, the upper limit thereof is usually preferably 1.0 mass% or less. In particular, the upper limit of the content thereof is preferably 0.9 mass% or less, more preferably 0.8 mass% or less, particularly preferably 0.7 mass% or less, more particularly preferably 0.6 mass% or less, and even more particularly preferably 0.5 mass% or less. By setting the starch content to a predetermined proportion or less in the fraction, the viscosity of the mushroom-ingredient-containing food product is suppressed, thermal convection during heating becomes uniform, and the ingredients can be uniformly heated. In addition, the chewing texture of the heat-cooked mushroom ingredients is sensed, and thus such a ratio is preferable. When the content exceeds the predetermined proportion, the chewing texture of the heat-cooked mushroom ingredients may not be sensed in some cases. Although the principle thereof is unclear, it is thought that when the starch content exceeds the predetermined proportion, thermal convection during heating becomes insufficient, and thereby the mushroom ingredients are overheated, and the chewing texture is not easily sensed due to bursting of the mushroom ingredients. The lower limit is not particularly limited, but from the viewpoint of industrial production efficiency, for example, starch may be substantially not contained, or the content thereof may be 0 mass%, more than 0 mass%, or 0.1 mass% or more.

In addition, the food product of the present invention preferably contains, at a predetermined proportion or less in terms of wet mass, a starch-containing edible plant that contains starch as a main component (for example, a starch content of 50 mass% or more or 70 mass% or more in terms of dry mass) in a 10 mesh-pass fraction. Specifically, the content of the starch-containing edible plant in the fraction can be, for example, in a range from 0 mass% to 1.0 mass% in terms of wet mass. More specifically, the upper limit thereof is usually preferably 1.0 mass% or less. In particular, the upper limit of the content thereof is preferably 0.9 mass% or less, more preferably 0.8 mass% or less, particularly preferably 0.7 mass% or less, more particularly preferably 0.6 mass% or less, and even more particularly preferably 0.5 mass% or less. On the other hand, the lower limit thereof is not particularly limited, but, for example, the starch-containing edible plant may be substantially not contained, or the lower limit may be 0 mass%, or more than 0 mass%. By setting the content of the starch-containing edible plant in the fraction to a predetermined proportion or less, the viscosity of the mushroom-ingredient-containing food product is suppressed, thermal convection during heating becomes uniform, and the ingredients can be uniformly heated. In addition, the chewing texture of the heat-cooked mushroom ingredients is sensed, and thus such a ratio is preferable. When the content exceeds the predetermined proportion, the chewing texture of the heat-cooked mushroom ingredients may not be sensed in some cases. Although the principle thereof is unclear, it is thought that when the starch-containing edible plant content exceeds the predetermined proportion, thermal convection during heating becomes insufficient, and thereby the mushroom ingredients are overheated, and the chewing texture is not easily sensed due to bursting of the mushroom ingredients.

As a method for measuring the starch content in the food product of the present invention, a conventional method can be used. Examples thereof include methods in accordance with the methods described in the "Food Labeling Standards (Cabinet Office Ordinance No. 10, 2015)" and in the "Standard Tables of Food Composition in Japan - 2015 (Seventh Revised Version), Analysis Manual". Specific examples thereof include a method in which soluble carbohydrates (such as glucose, maltose, and maltodextrin) that affect the measured value are removed through an 80% ethanol extraction treatment in accordance with the method of AOAC 996.11.

·Soluble Saccharides Content of 10 Mesh-Pass Fraction:

In the food product of the present invention, the content of soluble saccharides in the 10 mesh-pass fraction is preferably a predetermined proportion or less. By setting the soluble saccharide content in the fraction to a predetermined range, the viscosity of the mushroom-ingredient-containing food product is suppressed, thermal convection during heating becomes uniform, and the ingredients can be uniformly heated. Specifically, the content of soluble saccharides in terms of wet mass in the food product of the present invention can be, for example, in a range from 0.1 mass% to 10 mass% or less. More specifically, the upper limit thereof is preferably 10 mass% or less. In particular, the upper limit thereof is preferably 9.0 mass% or less, more preferably 8.0 mass% or less, particularly preferably 7.0 mass% or less, 6.0 mass% or less, 5.0 mass% or less, 4.5 mass% or less, 4.0 mass% or less, 3.5 mass% or less, 3.0 mass% or less, 2.5 mass% or less, 2.0 mass% or less, or 1.5 mass% or less, and is more particularly preferably 1.0 mass% or less. The lower limit is not particularly limited, but may be, for example, 0.1 mass% or more from the viewpoint of industrial production efficiency. Note that the term "soluble saccharides" in the present invention refers to, for example, a monosaccharide or an oligosaccharide.

·Moisture Content in Terms of Wet Mass:

The moisture content in terms of wet mass of the food product of the present invention is not limited, and can be, for example, in a range from 40 mass% to less than 100 mass%. More specifically, the lower limit may be 40 mass% or more, 50 mass% or more, or 60 mass% or more. On the other hand, the upper limit thereof is not limited, but may be, for example, less than 100 mass%, 90 mass% or less, or 80 mass% or less. The moisture content in terms of wet mass is preferably within the above-described numerical range even in the 10 mesh-on fraction. The moisture content in terms of wet mass is also preferably within the above-described numerical range in the 10 mesh-pass fraction as well.

In the present disclosure, the "moisture content in terms of wet mass" means a proportion of a total of the amount of moisture derived from the raw materials of a food product sample and the amount of additional moisture separately added to the food product sample. The numerical value is measured by heating to 90°C using a reduced pressure heating and drying method in accordance with the Standard Tables of Food Composition in Japan - 2015 (Seventh Revised Version). Specifically, an appropriate amount of a sample is collected in a weighing container (the mass of the container is denoted by $W^0$) adjusted to a constant weight in advance, and the sample in the container is weighed (the mass thereof is denoted by $W^1$), and at normal pressure, the weighing container containing the sample is inserted into a reduced pressure/constant temperature electric dryer adjusted to a predetermined temperature (more specifically, 90°C) with the lid of the weighing container being removed or the mouth of the container being open, a door to the dryer is closed, and a vacuum pump is operated to dry the sample for a predetermined amount of time at a predetermined degree of reduced pressure, after which the vacuum pump is stopped, dry air is fed therein to restore to a normal pressure, the weighing container is removed, the lid is placed thereon, and the container is allowed to cool in a desiccator, after which the mass is weighed. This process of drying, cooling, and weighing is repeated in this manner until a constant weight is obtained (the mass thereof is referred to as $W^2$), and subsequently, the moisture content (moisture content in terms of wet mass) (mass%) is obtained by the following equation.

[Math. 1]

$$\text{Moisture content (moisture content percentage in terms of wet mass) (mass\%)} = [(W^1 - W^2) / (W^1 - W^0)] \times 100$$

·Total Oil and Fat Content:

The total oil and fat content in the food product of the present invention is not limited, and can be, for example, in a range from 1 mass% to less than 50 mass% in terms of wet mass. More specifically, the lower limit can be 1 mass% or more, and in particular, the lower limit can be 3 mass% or more, 5 mass% or more, 7 mass% or more, 8 mass% or more, or 9 mass% or more, and in particular, can be 10 mass% or more. On the other hand, the upper limit of the total oil and fat content in the mushroom-ingredient-containing food product is not particularly limited, but may be, for example, less than 50 mass% in terms of wet mass. The oil and fat content is preferably within the above-mentioned numerical range even in the 10 mesh-on fraction. The moisture content in terms of wet mass is also preferably within the above-described numerical range in the 10 mesh-pass fraction as well.

As a method for measuring the oil and fat content in the food product of the present invention, a conventional method can be used. Examples thereof include methods in accordance with the methods described in the "Food Labeling Standards (Cabinet Office Ordinance No. 10, 2015)" and in the "Standard Tables of Food Composition in Japan - 2015 (Seventh Revised Version), Analysis Manual". Specific examples thereof include a chloroform-methanol mixed liquid extraction method and a Soxhlet extraction method.

The origin of the oils and fats in the food product of the present invention is not particularly limited. For example, the oils and fats can be derived from plants or can be derived from animals, but oils and fats derived from plants are preferable. In the present invention, the proportion of plant-derived oil and fat content to the total oil and fat content of the entire mushroom-ingredient-containing food product is preferably a predetermined proportion or greater. Specifically, the proportion of the plant-derived oil and fat content to the total oil and fat content of the entire mushroom-ingredient-containing food product can be in a range of, for example, from 50 mass% or more to 100 mass%, or from 50 mass% or more to 100 mass% or less, in terms of wet mass. More specifically, the lower limit is preferably, for example, 50 mass% or more, and in particular, the lower limit is more preferably 60 mass% or more, 70 mass% or more, 80 mass% or more, or 90 mass% or more, and is particularly preferably 100 mass%. The upper limit is not particularly limited, but can usually be 100 mass% or 100 mass% or less. Examples of the plant-derived oils and fats include those derived from grains, legumes, potatoes, vegetables, nuts, and fruits.

The oil and fat content in the food product of the present invention may be blended as an isolated pure product into the food product and/or composition of the present invention, or may be blended in a state of being contained in an edible plant into the food product and/or composition of the present invention. Specifically, in relation to the total oil and fat content in the mushroom-ingredient-containing food product, the content in terms of wet mass of the oil and fat content blended as an isolated pure product into the food product and/or composition of the present invention may be in a range of, for example, from 50 mass% to 100 mass%, or from 50 mass% or more to 100 mass% or less. More specifically, the lower limit thereof is preferably 50 mass% or more, and in particular, the lower limit is more preferably 60 mass% or more, 70 mass% or more, 80 mass% or more, or 90 mass% or more, and is particularly preferably 100 mass%. The upper limit is not particularly limited, but can usually be 100 mass% or 100 mass% or less.

·Other Components:

The food product of the present invention may contain any one or more types of other components in addition to the various components described above. Examples of the other components include seasonings and food additives.

Specific examples of seasonings and food additives that may be contained in the food product of the present invention include soy sauce, soy bean paste, alcohols, saccharides (for example, glucose, sucrose, fructose, glucose-fructose liquid sugar, and fructose-glucose liquid sugar), sugar alcohols (for example, xylitol, erythritol, and maltitol), artificial sweeteners (for example, sucralose, asparame, saccharin, and acesulfame K), minerals (for example, calcium, potassium, sodium, iron, zinc, magnesium, and the like, and salts of the same), spices, pH adjusters (for example, sodium hydroxide, potassium hydroxide, lactic acid, citric acid, tartaric acid, malic acid, and acetic acid), cyclodextrins, antioxidants (for example, vitamin E, vitamin C, tea extract, raw coffee bean extract, chlorogenic acid, spice extracts, caffeic acid, rosemary extract, vitamin C palmitate, rutin, quercetin, bayberry extract, and sesame extract), emulsifiers (for example, glycerin fatty acid esters, acetic acid monoglyceride, lactic acid monoglyceride, citric acid monoglyceride, diacetyl tartaric acid monoglyceride, succinic acid monoglyceride, polyglycerin fatty acid esters, polyglycerin condensed ricinoleates, quillaja extract, soybean saponin, tea seed saponin, sucrose fatty esters, and lecithin), colorants, and thickening stabilizers.

However, in view of the recent growing interest in natural ingredients, the food product of the present invention preferably does not contain one of the following three types of components, more preferably does not contain two of the following three types of components, and even more preferably does not contain any of the following three types of components: so-called emulsifiers, colorants, and thickening stabilizers (for example, those described as "colorants", "thickening stabilizers", and "emulsifiers" in the "Table of Food Additive Substance Names for Labeling" found in the Food Additive Labeling Pocketbook (2011 Edition)). In particular, the food product of the present invention preferably substantially does not contain (or does not contain) xanthan gum, which is a typical thickening stabilizer.

Method for Producing Food Product of the Present Invention

·Overview:

One aspect of the present invention relates to a method for producing a mushroom-ingredient-containing food product of the present invention, wherein the food product contains mushroom ingredients of specific sizes at specific proportions. In order to produce the food product of the present invention, mushroom ingredients having predetermined sizes and liquid medium may be mixed as raw materials, and optional components such as other edible plants and other various seasonings and food additives may be optionally mixed therewith. As a specific example, the food product of the present invention can be produced by stirring and mixing solid raw materials in a liquid raw material such as water or vinegar, after which the remaining liquid raw material may be subsequently added, and the solid raw materials may be dissolved while being mixed with a mixer. Also, if necessary, a heat sterilization treatment, a cooling treatment, a container filling process, or the like may be carried out.

Of such production methods, the food product of the present invention is preferably produced by a specific production method that comprises at least a step (i) described below (the method thereof being appropriately referred to as "the production method of the present invention").

(i) a step of preparing a mixture that satisfies all of the following (1) to (3):

(1) the mixture contains a mushroom ingredient having a shortest side length greater than 5 mm at a content of 1 mass% or greater in terms of wet mass in the mixture.
(2) the content ratio of a mushroom ingredient having a shortest side length of 5 mm or less to the mushroom ingredient having a shortest side length greater than 5 mm is 20 times or less in terms of wet mass in a 10 mesh-on fraction;
(3) when a 10 mesh-pass fraction is measured by the above "Method $\alpha$", the maximum viscosity at a time point when the fraction reaches 80°C is less than the 1200 cP.

Further, the production method of the present invention may optionally comprise the following method:
(ii) a step of heating the mixture obtained of step (i) at a temperature of 80°C or higher for 0.1 minutes or longer.

·Step (i):

In step (i), a mixture that serves as the basis for the food product of the present invention is prepared. Basically, details described above regarding the composition, physical properties and other details of the food product of the present invention can be directly adopted to prepare the mixture.

Upon the preparation of the mixture, the mushroom ingredient having a shortest side length greater than 5 mm, the mushroom ingredient having a shortest side length of 5 mm or less, and the medium of the 10 mesh-pass fraction may be separately prepared and then mixed. Alternatively, a mixture containing ingredients of desired sizes may be formed by subjecting one type of edible plant or a mixture of two or more types of edible plants constituting both the ingredients and the medium to a treatment such as cutting, grinding, crushing, and heating to adjust the ingredient size. Furthermore, these techniques may be appropriately combined.

·Step (ii):

In step (ii), the mixture prepared in step (i) is subjected to a heating treatment. Step (ii) is optional but may be preferably implemented for sterilization purposes. The heating temperature (maximum temperature during heating) in the heating treatment is not limited, but can be set to a range of, for example, from 60°C to 200°C. More specifically, the lower limit is usually 60°C or higher, and in particular, the lower limit is preferably 70°C or higher, and more preferably 80°C or higher. When the heating temperature is lower than the lower limit, the sterilization quality may be insufficient. Depending on the embodiment, the lower limit of the heating temperature may be higher than this, and for example, the lower limit may be set to 90°C or higher, 100°C or higher, 110°C or higher, or 120°C or higher. The upper limit of the heating temperature is not limited, but is usually 200°C or lower, and in particular, the upper limit is preferably 190°C or lower, more preferably 180°C or lower, even more preferably 170°C or lower, yet even more preferably 160°C or lower, and still even more preferably 150°C or lower. When the heating temperature is higher than the above-described upper limit, the quality of the food product of the present invention may be affected by a heating odor. Note that depending on the embodiment, the upper limit of the heating temperature may be lower than this, and for example, the upper limit may be set to 140°C or lower, 130°C or lower, or 125°C or lower.

The heating time (the time during which the heating temperature is maintained in a suitable range) of the heating treatment is also not limited, but may be, for example, in a range from 0.1 minutes to less than 10 hours. More specifically, the lower limit is usually 0.1 minutes or longer, and in particular, the lower limit is preferably 0.3 minutes or longer, more preferably 0.5 minutes or longer, and particularly preferably 1 minute or longer, 3 minutes or longer, 5 minutes or longer, 7 minutes or longer, or 10 minutes or longer. When the heating time is shorter than the above-described lower limit, the quality of sterilization may be insufficient. Also note that depending on the embodiment, the lower limit of the heating time may be longer than this, and for example, may be 15 minutes or longer, or 20 minutes or longer. The upper limit of the heating time is also not limited, but is usually less than 10 hours, and in particular, the upper limit is preferably less than 5 hours, and more preferably less than 3 hours, or less than 1 hour. When the heating time is shorter than the upper limit described above, the quality of the food product of the present invention may be such that a heating odor is exhibited. Also note that depending on the embodiment, the upper limit of the heating time may be shorter than this, and for example, may be less than 50 minutes, less than 40 minutes, or less than 30 minutes.

Note that during the heating treatment, the continuous time during which the heating temperature is maintained in the suitable range may satisfy the suitable range of the above-mentioned heating time. However, during the heating treatment, even if a temperature lower than the above-mentioned suitable range of the heating temperature is interposed, time periods intermittently satisfying the suitable range of the heating temperature are present, and the total of such time periods may satisfy the suitable range for the heating time. In addition, even if the total of the time periods satisfying the suitable range of the heating temperature does not satisfy the suitable range of the heating time, the same effect as that in the case in which the suitable range of the heating time is satisfied may be obtained in some cases by maintaining the temperature in a range close to the heating temperature for a long period of time. In particular, the mixture is preferably heated for 0.1 minutes or longer, preferably 0.3 minutes or longer, preferably 0.5 minutes or longer, preferably 1 minute or longer, preferably 5 minutes or longer, and particularly preferably 10 minutes or longer while the mixture is maintained at a temperature of usually 60°C or higher, 70°C or higher, or 80°C or higher, and in particular, preferably 90°C or higher, more preferably 100°C or higher, or 110°C or higher, and particularly preferably 120°C or higher.

The pressure in the heating treatment is also not limited, but the treatment is usually carried out at normal pressure or in a pressurized state. Other conditions in the heating treatment are also not limited and may be appropriately selected. Specific examples of the sterilization method include a method using a heat exchanger such as a jacket tank, a coiled tube tank, or a plate heater, a method of mixing steam, and retort sterilization under high temperature and high pressure conditions.

In the production step (i) of the food product of the present invention, the starch content in the 10 mesh-pass fraction of the food product of the present invention is preferably at a predetermined proportion or less in terms of wet mass. This is because fluidity is easily generated in the liquid portion during the heating treatment, and the effects of the present invention are likely to be exhibited. Specifically, the starch content in the 10 mesh-pass fraction of the food product of the present invention can be, for example, in a range from 0 mass% to 1.0 mass% in terms of wet mass. More specifically, the upper limit thereof is preferably 1.0 mass% or less. In particular, the upper limit of the content thereof is preferably 0.9 mass% or less, more preferably 0.8 mass% or less, particularly preferably 0.7 mass% or less, more particularly preferably 0.6 mass% or less, and even more particularly preferably 0.5 mass% or less. The lower limit is not particularly limited, but from the viewpoint of industrial production efficiency, the lower limit may be, for example, 0 mass% or more, or 0.1 mass% or more.

·Other Treatments:

Upon the production of the food product of the present invention, any additional treatment may be added to the above-described treatments. Examples of such optional treatments include container filling, sterilization, stirring, emulsification, kneading, a strainer treatment, filtration, fermentation, a steam treatment, and an activated carbon treatment.

When the food product of the present invention is filled into a container, the details of the filling process thereof are arbitrary. However, when the food product of the present invention is used as a dry grocery product, in order to prevent microbial contamination in the container, the filling is carried out by methods such as aseptic filling in which the container is sterilized and then filled with a content liquid that is likewise in a sterilized state, hot pack filling in which a content liquid that has been heated and sterilized is filled into a container in a high-temperature state, and microorganisms in the container are controlled by the heat of the content liquid, and post-filling sterilization in which a container filled with a content liquid is heated in a pasteurizer or a retort pot to control the microorganisms in the container.

Any container can be used as the container to be filled with the food product of the present invention. For example, the food product can be filled into a commonly used seasoning liquid container, such as a retort pouch, a PET bottle, a bottle, a can, a paper pack, an aluminum pouch, a vinyl bag, a bag-in-box, a container partially or entirely made of a resin, a barrel, a measuring container, and a ceramic container. In addition, a container in which the mushroom-ingredient-containing food product serving as the content is likely to deteriorate may also be used. Examples of such containers include a long-life normal-temperature (20°C in the present disclosure) storage container having a shelf life of more than 4 months from the date of manufacture, a non-disposable container that can be used multiple times by sealing the container after opening, and resealable containers having a mechanism such as a resealable cap or stopper that does not allow the content liquid to leak out.

When a pouch container made of a soft and flexible material such as a plastic film or an aluminum foil is used as a packaging container, the container is preferably heat-resistant. Specifically, the pouch container is preferably a heat-resistant pouch that allows cooking by heating in a microwave oven (such heating is appropriately referred to as "microwave heating"). Further, the pouch container is preferably a self-standing pouch having folding "gussets" on the sides and bottom. The pouch container may also be a microwave pouch that can be directly subjected to cooking with microwave heating by automatically releasing steam from a steam port to prevent rupturing during cooking with microwave heating while also satisfying standards for seal strength required during distribution such as storage and transportation. In the present disclosure, use of a pouch container that can be subjected to cooking with microwave heating is preferable from the viewpoint of obtaining good taste and ease of use. Further, in addition to suppressing explosive boiling during heat cooking, the present invention includes an application invention based on the discovery that the hitherto unknown attribute of this product, which maintains the chewing texture of the mushroom ingredients even after heat cooking, makes it suitable for use in new applications such as an application for cooking with microwave heating. Specifically, the present invention encompasses an invention in which the food product of the present invention is used in an application for cooking with microwave heating. In particular, the present invention is preferably an invention in which the food product while being contained in a container is used in an application for cooking with microwave heating. Further, the container is preferably a container that can be used for cooking with microwave heating, and more preferably is a pouch container. In addition, regarding the conditions for cooking with microwave heating, the output and the heat cooking time may be appropriately adjusted according to the properties of the food product to be cooked. However, heat cooking are preferably carried out under a condition in which an amount of heat equal to or greater than a predetermined value is applied. Specifically, for example, the amount of heat to be applied may be in a range from 10000 J to less than 90000 J. More specifically, the lower limit thereof may usually be 10000 J or more, 12000 J or more, 14000 J or more, 16000 J or more, 18000 J or more, 20000 J or more, 22000 J or more, or 24000 J or more. On the other hand, the upper limit thereof is not limited, but may be, for example, less than 90000 J, less than 85000 J, less than 80000 J, less than 75000 J, less than 70000 J, less than 65000 J, less than 62000 J, less than 58000 J, less than 52000 J, or less than 48000 J. For example, in a case in which microwave heat cooking are carried out at 18000 J or higher, the heating conditions may be 180 seconds or longer at 100 W, 90 seconds or longer at 200 W, 60 seconds or longer at 300 W, 45 seconds or longer at 400 W, 36 seconds or longer at 500 W, 30 seconds or longer at 600 W, 22.5 seconds or longer at 800 W, 18 seconds or longer at 1000 W, and 15 seconds or longer at 1200 W.

In addition, the method for storing the food product of the present invention is not limited, and the food may be stored at normal temperature or stored under refrigeration. In particular, even if the food product of the present invention is provided as a dry grocery product that can be distributed and stored for a long period of time (in the present disclosure, 4 months or longer, 6 months or longer, 8 months or longer, and more preferably 10 months or longer) at normal temperature, deterioration of the content liquid is less likely to progress, which is preferable. In particular, the food product of the present invention is preferably a long-life normal temperature-storage type mushroom-ingredient-containing food product that can be stored at normal temperature with a shelf life of longer than 4 months.

The method of using and eating the food product of the present invention is not particularly limited. As one example, the food product of the present invention can be used as a seasoning and eaten together with other food products. Examples of food products that can be eaten together with the food product of the present invention include, but are not limited to, various food materials such as uncooked or cooked meats, fish and shellfish, edible plants (for example, vegetables, grains, and fruits), and various processed food products in which one or more of these food materials are used. Examples of processed food products to be eaten in combination with the food product of the present invention include noodles (for example, pasta, ramen, udon, fine wheat noodles, thin udon noodles, and buckwheat noodles) in which various edible plants (for example, legumes) are used. In this case, the food product of the present invention may be used as a soup broth and eaten in combination with noodles. The mode of combination is also not limited, and noodles may be immersed in the food product of the present invention and eaten, or the food product of the present invention may be poured over noodles and eaten. In addition, the food product may of course be eaten after being appropriately subjected to cooking such as heating. Alternatively, the food product of the present invention may be eaten alone (as is or after being diluted with a medium such as water) in a form such as soup, for example, without being combined with another food product.

Method of Present Invention for Suppressing Explosive Boiling during Heat Cooking of Mushroom-Ingredient-Containing Food Product and/or Maintaining Chewing Texture of Mushroom Ingredients after Heat Cooking

Another aspect of the present invention relates to a method for suppressing explosive boiling during heat cooking of a food product containing mushroom ingredients. Yet another aspect of the present invention relates to a method for maintaining a chewing texture of mushroom ingredients after heat cooking of a food product containing the mushroom ingredients. Still another aspect of the present invention relates to a method for suppressing explosive boiling during heat cooking of a food product containing mushroom ingredients while maintaining a chewing texture of the mushroom ingredients after the heat cooking. Similar to the production method of the present invention, these methods include the above step (i) and optionally further include the above step (ii). The other details are as already described in detail above.

Examples

Hereinafter, the present invention will be described in more detail with reference to examples, but these examples are merely examples for convenience of explanation, and the present invention is not limited to these examples in any way.

Preparation of Mushroom-Ingredient-Containing Food Product Sample

Mushrooms and edible plants were prepared and added at the content amounts described for each test example and comparative example, and rice bran oil was further added and mixed therewith to obtain mixtures of each test example and comparative example. Onions and tomatoes were used as vegetables, eryngii, button mushrooms, enokitake, shiitake, and buna-shimeji mushrooms were used as mushrooms, cashew nuts were used as nuts, and green peas were used as legumes. Moreover, the rice bran oil was adjusted such that the content thereof was 10 mass% in terms of wet mass in all the food products samples of the test examples and comparative examples. Also, in the present disclosure, the term "potato" refers to starch extracted from potatoes. Pouch containers heatable in a microwave oven (for example, MRGLPET12/PET12/CPP60, available from Toppan Inc.) were filled with these mixtures, and thereby mushroom-ingredient-containing food product samples of each test example and comparative example were obtained.

Evaluation of Physical Properties and Characteristics of Mushroom-Ingredient-Containing Food

Product Samples

The mushroom-ingredient-containing food product sample of each test example and comparative example was heated for 1 minute at 90°C, after which 100 g (at 20°C) of each sample was thinly and evenly spread on a 1-mesh sieve and a 10-mesh sieve stacked in this order. After the sample was left on the stacked sieves for 10 minutes, mushroom ingredients having a shortest side length greater than 5 mm and mushroom ingredients having a shortest side length of 5 mm or less were collected from the 10 mesh-on fraction, and the dimensions and volumes thereof were measured as sizes (shapes) thereof. Also, the 10 mesh-pass fraction was collected as a liquid medium fraction, and the wet mass was measured.

Among the contents of the components of each test example and comparative example, the "starch" was measured by a method in which the soluble carbohydrates (such as glucose, maltose, and maltodextrin) affecting the measured value were removed by an 80% ethanol extraction treatment in accordance with the method of AOAC 996.11 pursuant to the Standard

Tables of Food Composition in Japan - 2015 (Seventh Revised Version).

Among the contents of the components in each test example and comparative example, the "insoluble dietary fiber" was measured by a method of subjecting the insoluble dietary fiber to a modified Prosky's method according to the method described in the Standard Tables of Food Composition in Japan.

The viscosity measurements presented for each test example and comparative example were carried out according to the following procedures using a rapid visco analyzer (RVA). That is, a rapid visco analyzer (RVA) was used to heat 25 g of a measurement sample from 50°C to 80°C at a temperature increase rate of 6°C/min and measure the viscosity. Specifically, for each measurement sample, the RVA4800 available from Perten Instruments was used as the rapid visco analyzer (RVA), 25.0 g of the 10 mesh-pass fraction of the food product of the sample was placed in an aluminum cup for measurements (volume: approximately 70 mL), measurements were started at 50°C, the rotational speed was set to 960 rpm from the startup of measurements to 10 seconds after measurements were started, the rotational speed was then set to 160 rpm from 10 seconds after measurements were started until measurements were completed, and the RVA viscosity profile was measured while the temperature was increased at a temperature increase rate of 6°C/minute and while the sample was stirred by rotating two paddles (blades) measuring around 13 mm $\times$ 19 mm. Note that in the examples, in a case in which the viscosity of 25 g of a measurement sample of a 10 mesh-pass fraction was measured using a rapid visco analyzer (RVA) while increasing the temperature from 50°C to 80°C at a temperature increase rate of 6°C/min, the maximum viscosity (cP) at the time point when the sample temperature reached 80°C was expressed as the "maximum viscosity", the viscosity (cP) at 50°C was expressed as the "50°C viscosity", and a ratio of a "[value $\beta$ (viscosity (cP) at 80°C)]/[value $\alpha$ (viscosity (cP) at 50°C)]" was expressed as the "ratio of [value $\beta$]/[value $\alpha$]".

Sensory Evaluation of Mushroom-Ingredient-Containing Food Product Sample

The mushroom-ingredient-containing food products prepared in the test examples and comparative examples were subjected to a sensory evaluation by ten trained sensory examiners. For each food product composition produced according to the procedures of each example, a sample stored at 20°C was heat-cooked in a microwave oven (for example, the NE-MS264, available from Panasonic Corp.) at 500 W for 90 seconds, and the degree of boil over of the mushroom-ingredient-containing food product from the steam port during heat cooking, bubbles in the food product inside the pouch container, and the degree of generation of bubbles when the food product was removed from the pouch container after heat cooking in the microwave oven were observed and evaluated as (1) the degree of suppression of explosive boiling during heat cooking.

In addition, a 1 mesh-pass/10 mesh-on ingredient fraction of the mushroom-ingredient-containing food product after heat cooking was eaten, and (2) the chewing texture of the mushroom ingredients after heat cooking was evaluated. In addition, a comment regarding whether the ingredients were uniformly heated was recorded.

Moreover, (3) a comprehensive evaluation was conducted to determine whether the mushroom-ingredient-containing food product exhibited suppressed excessive boiling from heating, was easy to use, contained mushroom ingredients for which the chewing texture remained even after heat cooking, and exhibited a good balance between palatability and usability, and the obtained results were described.

Note that even when the contents of the food product of the present invention were removed from the pouch container and placed on a flat dish, and a sample stored at 20°C was heated in a microwave oven for 90 seconds at 500 W, similar effects were observed with regard to (1) the degree of suppression of explosive boiling during heat cooking, (2) the chewing texture of the mushroom ingredients after heat cooking, and (3) the comprehensive evaluation.

Examiners were trained in advance for identification of the following items A) to C), and from the trained examiners, those examiners who achieved particularly excellent results, had experience in product development, had abundant knowledge regarding the qualities of taste and texture of food products, and were able to perform absolute evaluations regarding each sensory inspection item were selected as sensory examiners for conducting each sensory test.

A) A taste quality identification test for accurately identifying a sample of a respective taste from among a total of seven samples obtained by preparing, for each of the five categories of taste (sweet: sugar taste, sour: tartaric acid taste, umami: monosodium glutamate taste, salty: sodium chloride taste, bitter: caffeine taste), one aqueous solution having a concentration close to the threshold value of each component, and also preparing two samples of distilled water.

B) A concentration difference identification test for accurately identifying concentration differences between five types of saline solutions and aqueous acetic acid solutions with slightly different concentrations.

C) A three-point identification test for accurately identifying the soy sauce of a manufacturer B from a total of three samples including two soy sauces of a manufacturer A and one soy sauce of the manufacturer B.

In addition, for each of the above evaluation items, standard samples were evaluated by all the examiners in advance, each score of the evaluation criteria was standardized, and an objective sensory test was carried out by ten examiners. The evaluation of each evaluation item was carried out by a method in which each examiner selected one number closest to the examiner's own evaluation from among five grades of evaluation scores for each item. The total of the evaluation results was calculated from the arithmetic mean value of the scores of the ten examiners and rounded to the nearest whole number to obtain the final score.

With respect to the mushroom-ingredient-containing food product of each example, the degree of suppression of explosive boiling during heat cooking was evaluated in accordance with the following five grades of evaluation scores.

5: Explosive boiling is suppressed, which is very preferable.
4: Explosive boiling is mostly suppressed, which is preferable.
3: Explosive boiling is somewhat suppressed and is within an allowable range.
2: Explosive boiling is hardly suppressed, and is slightly undesirable.
1: Explosive boiling is not suppressed, which is not preferable.

For the mushroom-ingredient-containing food product of each example, the chewing texture of the mushroom ingredients after heat cooking was evaluated according to the following five grades of evaluation scores. Note that when the ingredients were non-uniformly heated, a comment indicating such was recorded.

5: The chewing texture of the mushroom ingredients is sensed, and the food product is very palatable.
4: The chewing texture of the mushroom ingredients is sensed, and the food product is palatable.
3: The chewing texture of the mushroom ingredients is slightly sensed, and the palatability is within an acceptable range.
2: The chewing texture of the mushroom ingredient is hardly sensed, and the food product is slightly unpalatable.
1: The chewing texture of the mushroom ingredients is not sensed, and the food product is not palatable.

The mushroom-ingredient-containing food product of each example was comprehensively evaluated with regard to the balance between palatability and usability on the basis of the following five grades of evaluation scores.

5: The balance between palatability and usability is good, which is very preferable.
4: The balance between palatability and usability is relatively good, which is slightly preferable.
3: The balance between palatability and usability is within an acceptable range.
2: The balance between palatability and usability is slightly poor, which is slightly undesirable.
1: The balance between palatability and usability is very poor, which is not preferable.

Evaluation Results

The results are shown in Tables 2 to 4.

[Table 2-1]

| Table 2 | | 10 Mesh-On Fraction (Fraction A) | | | | | | | | [Y]/[X] |
|---|---|---|---|---|---|---|---|---|---|---|
| | | Mushroom ingredient having shortest side length exceeding 5 mm (Mushroom Ingredient X) | | | | | Mushroom ingredient having shortest side length of 5 mm or less (Mushroom Ingredient Y) | | | |
| | | Size (shape) | | Type of Mushroom | Content in Food Product (in terms of wet mass) | | Type of Mushroom | Content in Food Product (in terms of wet mass) | | |
| | | Dimensions | Volume | | By type | Total [X] | | By type | Total [Y] | |
| | | All in mm | mm$^3$ | | | mass% | | mass% | mass% | |
| Test Example | 1 | 5.5×6.0×6.0 | 198 | Eryngii | - | 5.0% | Button mushrooms | 2.0% | 40% | 0.8 |
| | | | | | | | Eryngii | 2.0% | | |
| Test Example | 2 | 6.0×6.0×6.0 | 216 | Eryngii | - | 5.0% | Button mushrooms | 2.0% | 40% | 0.8 |
| | | | | | | | Eryngii | 2.0% | | |
| Test Example | 3 | 6.5×7.0×7.0 | 318.5 | Eryngii | - | 5.0% | Button mushrooms | 20% | 4.0% | 0.8 |
| | | | | | | | Eryngii | 2.0% | | |
| Test Example | 4 | 8.0×8.0×8.0 | 512 | Eryngii | - | 5.0% | Button mushrooms | 2.0% | 40% | 0.8 |
| | | | | | | | Eryngii | 2.0% | | |
| Test Example | 5 | 10.0×10.0×19.5 | 1950 | Eryngii | - | 5.0% | Button mushrooms | 20% | 40% | 0.8 |
| | | | | | | | Eryngii | 2.0% | | |
| Comparative Example | 6 | - | - | - | - | 0.0% | Button mushrooms | 10.0% | 10.0% | Cannot be calculated because denominator is 0. |
| Comparative Example | 7 | 8.0×8.0×8.0 | 512 | Eryngii | - | 0.8% | Button mushrooms | 80% | 18.0% | 22.5 |
| | | | | | | | Eryngii | 10.0% | | |

EP 4 397 190 A1

(continued)

| Table 2 | | Mushroom ingredient having shortest side length exceeding 5 mm (Mushroom Ingredient X) | | | | | Mushroom ingredient having shortest side length of 5 mm or less (Mushroom Ingredient Y) | | | [Y]/[X] |
|---|---|---|---|---|---|---|---|---|---|---|
| | | Size (shape) | | Type of Mushroom | Content in Food Product (in terms of wet mass) | | Type of Mushroom | Content in Food Product (in terms of wet mass) | | |
| | | Dimensions | Volume | | By type | Total [X] | | By type | Total [Y] | |
| | | All in mm | mm$^3$ | | | mass% | | mass% | mass% | |
| Test Example | 8 | 8.0×8.0×8.0 | 512 | Eryngii | - | 1.0% | Button mushrooms | 80% | 18.0% | 18.0 |
| | | | | | | | Eryngii | 10.0% | | |
| Test Example | 9 | 8.0×8.0×8.0 | 512 | Eryngii | - | 1.8% | Button mushrooms | 80% | 18.0% | 10.0 |
| | | | | | | | Eryngii | 10.0% | | |
| Test Example | 10 | 8.0×8.0×8.0 | 512 | Eryngii | - | 3.8% | Button mushrooms | 80% | 16.0% | 4.2 |
| | | | | | | | Eryngii | 80% | | |

[Table 2-2]

| Table 2 | | Size (shape) | | Type of Mushroom | Content in Food Product (in terms of wet mass) | | Type of Mushroom | Content in Food Product (in terms of wet mass) | | [Y]/[X] |
|---|---|---|---|---|---|---|---|---|---|---|
| | | 10 Mesh-On Fraction (Fraction A) | | | | | | | | |
| | | Mushroom ingredient having shortest side length exceeding 5 mm (Mushroom Ingredient X) | | | | | Mushroom ingredient having shortest side length of 5 mm or less (Mushroom Ingredient Y) | | | |
| | | Dimensions | Volume | | By type | Total [X] | | By type | Total [Y] | |
| | | All in mm | mm$^3$ | | | mass% | | mass% | mass% | |
| Test Example | 11 | 8.0×8.0 ×80 | 512 | Eryngii | - | 5.7% | Button mushrooms | 7.0% | 14.0% | 2.5 |
| | | | | | | | Eryngii | 7.0% | | |
| Test Example | 12 | 8.0×8.0×8.0 | 512 | Eryngii | - | 10.7% | Button mushrooms | 40% | 9.0% | 0.8 |
| | | | | | | | Eryngii | 5.0% | | |
| Test Example | 13 | 8.0×8.0×8.0 | 512 | Eryngii | - | 14.5% | Button mushrooms | 20% | 4.0% | 0.3 |
| | | | | | | | Eryngii | 2.0% | | |
| Test Example | 14 | 8.0×8.0×8.0 | 512 | Eryngii | - | 18.1% | Button mushrooms | 0.5% | 1.0% | 0.06 |
| | | | | | | | Eryngii | 0.5% | | |
| Test Example | 15 | 8.0×8.0×8.0 | 512 | Eryngii | - | 25.6% | Button mushrooms | 0.2% | 0.3% | 0.01 |
| | | | | | | | Eryngii | 0.1% | | |
| Test Example | 16 | 8.0×8.0×8.0 | 512 | Eryngii | - | 3.8% | Button mushrooms | 16.0% | 270% | 7.1 |
| | | | | | | | Eryngii | 11.0% | | |
| Test Example | 17 | 8.0×8.0×8.0 | 512 | Eryngii | - | 3.8% | Button mushrooms | 25.0% | 60.0% | 15.8 |
| | | | | | | | Eryngii | 35.0% | | |

| Table 2 | | 10 Mesh-On Fraction (Fraction A) | | | | | | | | [Y]/[X] |
| | | Mushroom ingredient having shortest side length exceeding 5 mm (Mushroom Ingredient X) | | | | | Mushroom ingredient having shortest side length of 5 mm or less (Mushroom Ingredient Y) | | | |
| | | Size (shape) | | Type of Mushroom | Content in Food Product (in terms of wet mass) | | Type of Mushroom | Content in Food Product (in terms of wet mass) | | |
| | | Dimensions | Volume | | By type | Total [X] | | By type | Total [Y] | |
| | | All in mm | mm$^3$ | | | mass% | | mass% | mass% | |
| Comparative Example | 18 | 8.0×8.0×8.0 | 512 | Eryngii | - | 3.8% | Button mushrooms | 39.0% | 78.0% | 20.5 |
| | | | | | | | Eryngii | 39.0% | | |
| Test Example | 19 | 8.0×8.0×8.0 | 512 | Eryngii | - | 5.0% | Button mushrooms | 20% | 4.0% | 0.8 |
| | | | | | | | Eryngii | 2.0% | | |
| Test Example | 20 | 8.0×8.0×8.0 | 512 | Eryngii | - | 5.0% | Button mushrooms | 30% | 4.0% | 0.8 |
| | | | | | | | Eryngii | 1.0% | | |
| Test Example | 21 | 10.0×10.0×12.0 | 1200 | Button mushrooms | - | 5.0% | Button mushrooms | 1.0% | 4.0% | 0.8 |
| | | | | | | | Eryngii | 3.0% | | |

[Table 2-3]

| Table 2 | | 10 Mesh-On Fraction (Fraction A) | | | | | | | | [Y]/[X] |
|---|---|---|---|---|---|---|---|---|---|---|
| | | Mushroom ingredient having shortest side length exceeding 5 mm (Mushroom ingredient X) | | | | | Mushroom ingredient having shortest side length of 5 mm or less (Mushroom Ingredient Y) | | | |
| | | Size (shape) | | Type of Mushroom | Content in Food Product (in terms of wet mass) | | Type of Mushroom | Content in Food Product (in terms of wet mass) | | |
| | | Dimensions | Volume | | By type | Total [X] | | By type | Total [Y] | |
| | | All in mm | mm$^3$ | | | mas% | | mass% | mass% | |
| Test Example | 22 | 10.0×10.0×12.0 | 1200 | Button mushrooms | - | 5.0% | Eryngii | | 4.0% | 0.8 |
| Test Example | 23 | 10.0×10.0×12.0 | 1200 | Button mushrooms | 2.5% | 5.0% | Button mushrooms | 2.0% | 4.0% | 0.8 |
| | | | | Eryngii | 2.5% | | Eryngii | 2.0% | | |
| Test Example | 24 | 10.0×10.0×12.0 | 1200 | Button mushrooms | 3.0% | 5.0% | Button mushrooms | 2.0% | 4.0% | 0.8 |
| | | | | Eryngii | 2.0% | | Eryngii | 2.0% | | |
| Test Example | 25 | 20.0×10.0×5.5 | 1100 | Eryngii | - | 5.0% | Button mushrooms | 2.0% | 4.0% | 0.8 |
| | | | | | | | Eryngii | 2.0% | | |
| Test Example | 26 | 10.0×10.0×12.0 | 1200 | Eryngii | 2.5% | 5.0% | Eryngi i | 2.0% | 4.0% | 0.8 |
| | | | | Enokitake | 2.5% | | Enokitake | 2.0% | | |
| Test Example | 27 | 10.0×10.0×12.0 | 1200 | Shiitake | 2.5% | 5.0% | Shiitake | 2.0% | 4.0% | 0.8 |
| | | | | Buna-shimeji | 2.5% | | Buna-shimeji | 2.0% | | |
| Test Example | 28 | 10.0×10.0×12.0 | 1200 | Eryngii | - | 5.0% | Button mushrooms | 2.0% | 4.0% | 0.8 |
| | | | | | | | Eryngii | 2.0% | | |

| Table 2 | | 10 Mesh-On Fraction (Fraction A) | | | | | | | | |
|---------|---|---|---|---|---|---|---|---|---|---|
| | | Mushroom ingredient having shortest side length exceeding 5 mm (Mushroom ingredient X) | | | | | Mushroom ingredient having shortest side length of 5 mm or less (Mushroom Ingredient Y) | | | [Y]/ [X] |
| | | Size (shape) | | Type of Mushroom | Content in Food Product (in terms of wet mass) | | Type of Mushroom | Content in Food Product (in terms of wet mass) | | |
| | | Dimensions | Volume | | By type | Total [X] | | By type | Total [Y] | |
| | | All in mm | mm³ | | | mas% | | mass% | mass% | |
| Test Example | 29 | 8.0×8.0×8.0 | 512 | Eryngii | - | 5.0% | Button mushrooms | 7.0% | 14.0% | 2.8 |
| | | | | | | | Eryngii | 7.0% | | |
| Test Example | 30 | 8.0×8.0×8.0 | 512 | Eryngii | - | 5.0% | Button mushrooms | 7.0% | 14.0% | 2.8 |
| | | | | | | | Eryngii | 7.0% | | |
| Comparative Example | 31 | 8.0×8.0×8.0 | 512 | Eryngii | - | 5.0% | Button mushrooms | 7.0% | 14.0% | 2.8 |
| | | | | | | | Eryngii | 7.0% | | |

EP 4 397 190 A1

33

[Table 3-1]

| Table 3 | | 10 Mesh-Pass Fraction (Fraction B) | | | | | | | | | |
|---|---|---|---|---|---|---|---|---|---|---|---|
| | | Edible Plant | | | | | | Insoluble Dietary Fiber | Starch | RVA Viscosity Property During Heating from 50 → 80°C (Method α) | | |
| | | Other edible plants (p) | | Starch-containing edible plant (q) | | All edible plants (p+q) | | | | | | |
| | | Type | Content in Fraction B (in terms of wet mass) | Type | Content in Fraction B (in terms of wet mass) | Content in Fraction B (in terms of wet mass) | Content in Fraction B (in terms of wet mass) | Content in Fraction B (in terms of wet mass) | 50°C Viscosity | Maximum Viscosity | [Value β]/ [Value α] Ratio |
| | | | mass% | | | mass% | mass% | mass% | cp | cp | |
| Test Example | 1 | Onion | 5.0% | - | - | 10.0% | 1.1% | 0.0% | 72 | 72 | 0.72 |
| | | Tomato | 5.0% | | | | | | | | |
| Test Example | 2 | Onion | 5.0% | - | - | 10.0% | 1.1% | 0.0% | 72 | 72 | 0.72 |
| | | Tomato | 5.0% | | | | | | | | |
| Test Example | 3 | Onion | 5.0% | - | - | 10.0% | 1.1% | 0.0% | 72 | 72 | 0.72 |
| | | Tomato | 5.0% | | | | | | | | |
| Test Example | 4 | Onion | 5.0% | - | - | 10.0% | 1.1% | 0.0% | 72 | 72 | 0.72 |
| | | Tomato | 5.0% | | | | | | | | |
| Test Example | 5 | Onion | 5.0% | - | - | 10.0% | 1.1% | 0.0% | 72 | 72 | 0.72 |
| | | Tomato | 5.0% | | | | | | | | |
| Comparative Example | 6 | Onion | 0.3% | Potato | 1.5% | 2.1% | 0.2% | 1.5% | 226 | 1200 | 5.31 |
| | | Tomato | 0.3% | | | | | | | | |
| Comparative Example | 7 | Tomato | 10.0% | - | - | 10.0% | 1.3% | 0.0% | 98 | 98 | 0.68 |
| Test Example | 8 | Tomato | 10.0% | - | - | 10.0% | 1.3% | 0.0% | 98 | 98 | 0.68 |
| Test Example | 9 | Tomato | 10.0% | - | - | 10.0% | 1.3% | 0.0% | 98 | 98 | 0.68 |
| Test Example | 10 | Tomato | 10.0% | - | - | 10.0% | 1.3% | 0.0% | 98 | 98 | 0.68 |

EP 4 397 190 A1

34

[Table 3-2]

| Table 3 | | 10 Mesh-Pass Fraction (Fraction B) | | | | | | | | | |
|---|---|---|---|---|---|---|---|---|---|---|---|
| | | Edible Plant | | | | | | Insoluble Dietary Fiber | Starch | RVA Viscosity Property During Heating from 50 -. 80°C (Method α) | | |
| | | Other edible plants (p) | | Starch-containing edible plant (q) | | All edible plants (p+q) | | | | | | |
| | | Type | Content in Fraction B (in terms of wet mass) | Type | Content in Fraction B (in terms of wet mass) | Content in Fraction B (in terms of wet mass) | Content in Fraction B (in terms of wet mass) | Content in Fraction B (in terms of wet mass) | 50°C Viscosity | Maximum Viscosity | [Value β]/ [Value α] Ratio |
| | | | mass% | | | mass% | mass% | mass% | cp | cp | |
| Test Example | 11 | Tomato | 10.0% | - | - | 10.0% | 1.3% | 0.0% | 98 | 98 | 0.68 |
| Test Example | 12 | Tomato | 10.0% | - | - | 10.0% | 1.3% | 0.0% | 98 | 98 | 0.68 |
| Test Example | 13 | Tomato | 10.0% | - | - | 10.0% | 1.3% | 0.0% | 98 | 98 | 0.68 |
| Test Example | 14 | Tomato | 10.0% | - | - | 10.0% | 1.3% | 0.0% | 98 | 98 | 0.68 |
| Test Example | 15 | Tomato | 10.0% | - | - | 10.0% | 1.3% | 0.0% | 98 | 98 | 0.68 |
| Test Example | 16 | Tomato | 10.0% | - | - | 10.0% | 1.3% | 0.0% | 118 | 118 | 0.78 |
| Test Example | 17 | Tomato | 10.0% | - | - | 10.0% | 1.3% | 0.0% | 156 | 156 | 0.81 |
| Comparative Example | 18 | Tomato | 10.0% | - | - | 10.0% | 1.3% | 0.0% | 198 | 198 | 0.88 |
| Test Example | 19 | Cashew nut | 0.1% | - | - | 0.1% | 0.006% | 0.0% | 5 | 5 | 0.64 |
| Test Example | 20 | Cashew nut | 1.0% | - | - | 1.0% | 0.06% | 0.0% | 13 | 13 | 0.67 |
| Test Example | 21 | Cashew nut | 30% | - | - | 30% | 0.2% | 0.0% | 34 | 34 | 0.69 |

[Table 3-3]

| Table 3 | | 10 Mesh-Pass Fraction (Fraction B) | | | | | | | | | |
|---|---|---|---|---|---|---|---|---|---|---|---|
| | | Edible Plant | | | | | | Insoluble Dietary Fiber | Starch | RVA Viscosity Property During Heating from 50 → 80°C (Method α) | | |
| | | Other edible plants (p) | | Starch-containing edible plant (q) | | All edible plants (p+q) | | | | | | |
| | | Type | Content in Fraction B (in terms of wet mass) | Type | Content in Fraction B (in terms of wet mass) | Content in Fraction β (in terms of wet mass) | Content in Fraction B (in terms of wet mass) | Content in Fraction B (in terms of wet mass) | 50°C Viscosity | Maximum Viscosity | [Value β]/ [Value α] Ratio |
| | | | mass% | | | mass% | mass% | mass% | cp | cp | |
| Test Example | 22 | Cashew nut | 9.0% | - | - | 90% | 0.5% | 0.0% | 71 | 71 | 0.71 |
| Test Example | 23 | Cashew nut | 13.0% | - | - | 13.0% | 0.8% | 0.0% | 127 | 127 | 0.74 |
| Test Example | 24 | Cashew nut | 23.0% | - | - | 23.0% | 1.4% | 0.0% | 179 | 179 | 0.76 |
| Test Example | 25 | Cashew nut | 44.0% | - | - | 440% | 2.6% | 0.0% | 365 | 365 | 0.78 |
| Test Example | 26 | Cashew nut | 500% | - | - | 500% | 30% | 0.0% | 474 | 474 | 0.80 |
| Test Example | 27 | Cashew nut | 60.0% | - | - | 600% | 3.6% | 0.0% | 635 | 635 | 0.84 |
| Test Example | 28 | Cashew nut | 70.0% | - | - | 70.0% | 42% | 0.0% | 829 | 829 | 0.87 |
| Test Example | 29 | Onion | 5.0% | Green peas | 1.0% | 11.0% | 1.2% | 0.5% | 163 | 430 | 2.63 |
| | | Tomato | 5.0% | | | | | | | | |
| Test Example | 30 | Onion | 5.0% | Green peas | 2.0% | 12.0% | 1.3% | 1.0% | 168 | 720 | 428 |
| | | Tomato | 5.0% | | | | | | | | |

(continued)

| Table 3 | | 10 Mesh-Pass Fraction (Fraction B) | | | | | | | | | | |
|---|---|---|---|---|---|---|---|---|---|---|---|---|
| | | Edible Plant | | | | | | Insoluble Dietary Fiber | Starch | RVA Viscosity Property During Heating from 50 → 80°C (Method α) | | |
| | | Other edible plants (p) | | Starch-containing edible plant (q) | | All edible plants (p+q) | | | | | | |
| | | Type | Content in Fraction B (in terms of wet mass) | Type | Content in Fraction B (in terms of wet mass) | Content in Fraction β (in terms of wet mass) | Content in Fraction B (in terms of wet mass) | Content in Fraction B (in terms of wet mass) | 50°C Viscosity | Maximum Viscosity | [Value β]/ [Value α] Ratio |
| | | | mass% | | | mass% | mass% | mass% | cp | cp | |
| Comparative Example | 31 | Onion | 5.0% | Green peas | 2.8% | 12.8% | 1.4% | 1.4% | 172 | 1851 | 10.7 |
| | | Tomato | 50% | | | | | | | | |

[Table 4-1]

| Table 4 | | Functional Evaluation | | | Comment |
|---|---|---|---|---|---|
| | | Explosive boiling suppression | Chewing texture after heating | Comprehensive Evaluation (Balance) | |
| | | | | | |
| Test Example | 1 | 3 | 5 | 5 | - |
| Test Example | 2 | 4 | 5 | 5 | - |
| Test Example | 3 | 5 | 5 | 5 | - |
| Test Example | 4 | 5 | 5 | 5 | - |
| Test Example | 5 | 5 | 5 | 5 | - |
| Comparative Example | 6 | 1 | 3 | 1 | Non-uniform heating of ingredients |
| Comparative Example | 7 | 2 | 1 | 2 | - |
| Test Example | 8 | 4 | 3 | 3 | - |
| Test Example | 9 | 5 | 4 | 4 | - |
| Test Example | 10 | 5 | 4 | 4 | - |

[Table 4-2]

| Table 4 | | Functional Evaluation | | | Comment |
|---|---|---|---|---|---|
| | | Explosive boiling suppression | Chewing texture after heating | Comprehensive Evaluation (Balance) | |
| | | | | | |
| Test Example | 11 | 5 | 5 | 5 | - |
| Test Example | 12 | 5 | 5 | 5 | - |
| Test Example | 13 | 5 | 5 | 5 | - |
| Test Example | 14 | 5 | 5 | 5 | - |
| Test Example | 15 | 5 | 5 | 5 | - |
| Test Example | 16 | 4 | 4 | 4 | - |
| Test Example | 17 | 4 | 4 | 4 | - |
| Comparative Example | 18 | 3 | 2 | 2 | - |
| Test Example | 19 | 3 | 5 | 4 | - |
| Test Example | 20 | 4 | 5 | 4 | - |
| Test Example | 21 | 4 | 5 | 5 | - |

## EP 4 397 190 A1

[Table 4-3]

| Table 4 | | Functional Evaluation | | | |
|---|---|---|---|---|---|
| | | Explosive boiling suppression | Chewing texture after heating | Comprehensive Evaluation (Balance) | Comment |
| | | | | | |
| Test Example | 22 | 5 | 5 | 5 | - |
| Test Example | 23 | 5 | 5 | 5 | - |
| Test Example | 24 | 5 | 5 | 5 | - |
| Test Example | 25 | 5 | 5 | 5 | - |
| Test Example | 26 | 5 | 5 | 5 | - |
| Test Example | 27 | 5 | 5 | 5 | - |
| Test Example | 28 | 5 | 4 | 4 | Ingredient heating is somewhat uneven |
| Test Example | 29 | 5 | 4 | 3 | Ingredient heating is somewhat uneven |
| Test Example | 30 | 4 | 3 | 3 | Ingredient heating is somewhat uneven |
| Comparative Example | 31 | 2 | 2 | 2 | Non-uniform heating of ingredients |

[INDUSTRIAL APPLICABILITY]

The present invention can be widely applied in the fields of various food products containing mushroom ingredients, and its utility value is extremely high.

**Claims**

1. A food product containing mushroom ingredients, the food product satisfying all of the following (1) to (3):

    (1) the food product contains a mushroom ingredient having a shortest side length of greater than 5 mm at a content of 1.0 mass% or more in terms of wet mass in the food product;
    (2) the content ratio of a mushroom ingredient having a shortest side length of 5 mm or less to the mushroom ingredient having the shortest side length of greater than 5 mm is 20 times or less in terms of wet mass in a 10 mesh-on fraction;
    (3) when a 10 mesh-pass fraction is measured by "Method $\alpha$", the maximum viscosity at a time point when the fraction reaches 80°C is less than 1200 cP, wherein

    in the "Method $\alpha$", the viscosity of 25 g of a measurement sample is measured while the temperature is increased from 50°C to 80°C at a temperature increase rate of 6°C/minute using a rapid visco analyzer (RVA).

2. The food product according to claim 1, wherein the food product contains a mushroom ingredient having a volume of greater than 125 mm$^3$ at a content of 1.0 mass% or more in terms of wet mass in the food product.

3. The food product according to claim 1 or 2, wherein the 10 mesh-pass fraction contains an edible plant.

4. The food product according to claim 3, wherein the edible plant includes one or more edible plants selected from vegetables, grains, mushrooms, fruits, potatoes, algae, nuts, and legumes.

5. The food product according to any one of claims 1 to 4, wherein the content percentage of insoluble dietary fiber is 0.001 mass% or more in terms of wet mass in the 10 mesh-pass fraction.

6. The food product according to any one of claims 1 to 5, wherein when the 10 mesh-pass fraction is measured by said "Method $\alpha$", a ratio of [value $\beta$]/[value $\alpha$] is 5.0 or less, wherein

[Value $\alpha$] refers to a viscosity (cP) at 50°C, and
[Value $\beta$] refers to a viscosity (cP) at 80°C.

7. The food product according to any one of claims 1 to 6, wherein the food product contains starch at a content of 1.0 mass% or less in terms of wet mass in the 10 mesh-pass fraction.

8. The food product according to any one of claims 1 to 7, wherein the food product is used in an application for cooking with microwave heating.

9. A method for producing the food product described in any one of claims 1 to 8, the method comprising the following step (i):

(i) a step of preparing a mixture that satisfies all of the following (1) to (3):

(1) the mixture contains a mushroom ingredient having a shortest side length of greater than 5 mm at a content of 1.0 mass% or more in terms of wet mass in the mixture;
(2) the content ratio of a mushroom ingredient having a shortest side length of 5 mm or less to the mushroom ingredient having the shortest side length of greater than 5 mm is 20 times or less in terms of wet mass in a 10 mesh-on fraction;
(3) when a 10 mesh-pass fraction is measured by said "Method $\alpha$", the maximum viscosity at a time point when the fraction reaches 80°C is less than 1200 cP.

10. A method for suppressing explosive boiling during heat cooking of a food product containing mushroom ingredients, the method comprising the following step (i):

(i) a step of preparing a mixture that satisfies all of the following (1) to (3):

(1) the mixture contains a mushroom ingredient having a shortest side length of greater than 5 mm at a content of 1.0 mass% or more in terms of wet mass in the mixture;
(2) the content ratio of a mushroom ingredient having a shortest side length of 5 mm or less to the mushroom ingredient having the shortest side length of greater than 5 mm is 20 times or less in terms of wet mass in a 10 mesh-on fraction;
(3) when a 10 mesh-pass fraction is measured by said "Method $\alpha$", the maximum viscosity at a time point when the fraction reaches 80°C is less than 1200 cP.

11. A method for maintaining a chewing texture of mushroom ingredients after heat cooking of a food product containing mushroom ingredients, the method comprising the following step (i):

(i) a step of preparing a mixture that satisfies all of the following (1) to (3):

(1) the mixture contains a mushroom ingredient having a shortest side length of greater than 5 mm at a content of 1.0 mass% or more in terms of wet mass in the mixture;
(2) the content ratio of a mushroom ingredient having a shortest side length of 5 mm or less to the mushroom ingredient having the shortest side length of greater than 5 mm is 20 times or less in terms of wet mass in a 10 mesh-on fraction;
(3) when a 10 mesh-pass fraction is measured by said "Method $\alpha$", the maximum viscosity at a time point when the fraction reaches 80°C is less than 1200 cP.

12. A method for suppressing explosive boiling during heat cooking of a food product containing mushroom ingredients while maintaining a chewing texture of the mushroom ingredients after the heat cooking, the method comprising the following step (i):

(i) a step of preparing a mixture that satisfies all of the following (1) to (3):

(1) the mixture contains a mushroom ingredient having a shortest side length of greater than 5 mm at a content of 1.0 mass% or more in terms of wet mass in the mixture;

(2) the content ratio of a mushroom ingredient having a shortest side length of 5 mm or less to the mushroom ingredient having the shortest side length of greater than 5 mm is 20 times or less in terms of wet mass in a 10 mesh-on fraction;

(3) when a 10 mesh-pass fraction is measured by said "Method $\alpha$", the maximum viscosity at a time point when the fraction reaches 80°C is less than 1200 cP.

13. The method according to any one of claims 9 to 12, wherein in the step (i), the content percentage of starch is 1.0 mass% or less in terms of wet mass in a 10 mesh-pass fraction of the mixture.

14. The method according to any one of claims 9 to 13, further comprising the following step (ii): (ii) a step of heating the mixture of step (i) at a temperature of 60°C or higher for 0.1 minutes or longer.

15. The method according to claim 14, wherein in step (ii), the heating treatment is carried out such that when the 10 mesh-pass fraction of the mixture is measured by said "Method $\alpha$", a ratio of [value $\beta$]/[value $\alpha$] is 5.0 or less, wherein

[Value $\alpha$] refers to a viscosity (cP) at 50°C, and
[Value $\beta$] refers to a viscosity (cP) at 80°C.

## INTERNATIONAL SEARCH REPORT

International application No.

**PCT/JP2022/032634**

### A. CLASSIFICATION OF SUBJECT MATTER

***A23L 19/00***(2016.01)i
FI: A23L19/00 101

According to International Patent Classification (IPC) or to both national classification and IPC

### B. FIELDS SEARCHED

Minimum documentation searched (classification system followed by classification symbols)

A23L19/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | ファンファン福岡 [online], 31 December 2020 [retrieved on 28 October 2022], Internet:<URL:https://fanfunfukuoka.nishinippon.co.jp/561540>, (FANFUN FUKUOKA.) 特に、器のままレンジでチン！簡単ダイエットきのこスープの作り方, non-official translation (particularly, Chin in the microwave as it is! How to make easy diet mushroom soup) | 1-15 |
| X | クックパッド [online], 05 November 2011 [retrieved on 28 October 2022], Internet:<URL:https://cookpad.com/recipe/1619250>, (COOKPAD.) 特に、材料、作り方、つくれぽ, non-official translation (particularly, ingredients, how to cook, tsukurepo) | 1-15 |
| X | ライブドアブログ [online], 04 December 2017 [retrieved on 28 October 2022], Internet:<URL:https://yamamoto-ricopin.blog.jp/archives/27561689.html>, non-official translation (Livedoor blog.) 特に、きのこの中華スープ, non-official translation (particularly, Chinese mushroom soup) | 1-15 |

✓ Further documents are listed in the continuation of Box C.  ✓ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **28 October 2022** | **15 November 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**

| International application No. |
|---|
| **PCT/JP2022/032634** |

**C.    DOCUMENTS CONSIDERED TO BE RELEVANT**

| Category* | Citation of document, with indication, where appropriate, of the relevant passages | Relevant to claim No. |
|---|---|---|
| X | JP 2018-023327 A (POKKA SAPPORO FOOD & BEVERAGE LTD.) 15 February 2018 (2018-02-15)<br>claims, paragraph [0009], examples | 1-15 |
| A | JP 2015-130811 A (MIZKAN HOLDINGS CO., LTD.) 23 July 2015 (2015-07-23) | 1-15 |
| A | WO 2008/146915 A1 (Q.P. CORP.) 04 December 2008 (2008-12-04) | 1-15 |
| A | JP 2020-099204 A (AJINOMOTO CO., INC.) 02 July 2020 (2020-07-02) | 1-15 |

Form PCT/ISA/210 (second sheet) (January 2015)

## INTERNATIONAL SEARCH REPORT
### Information on patent family members

International application No.

**PCT/JP2022/032634**

| Patent document cited in search report | | | Publication date (day/month/year) | Patent family member(s) | | | Publication date (day/month/year) |
|---|---|---|---|---|---|---|---|
| JP | 2018-023327 | A | 15 February 2018 | (Family: none) | | | |
| JP | 2015-130811 | A | 23 July 2015 | (Family: none) | | | |
| WO | 2008/146915 | A1 | 04 December 2008 | US | 2010/0136179 | A1 | |
| JP | 2020-099204 | A | 02 July 2020 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018023327 A